(19)

Europäisches Patentamt
European Patent Office
Office européen des brevets

(11) **EP 4 495 912 A1**

(12) **EUROPEAN PATENT APPLICATION**
published in accordance with Art. 153(4) EPC

(43) Date of publication:
**22.01.2025 Bulletin 2025/04**

(21) Application number: **22931997.5**

(22) Date of filing: **15.03.2022**

(51) International Patent Classification (IPC):
**G08G 3/00** $^{(2006.01)}$        **B63B 79/10** $^{(2020.01)}$

(52) Cooperative Patent Classification (CPC):
**B63B 79/10; G08G 3/00**

(86) International application number:
**PCT/JP2022/011585**

(87) International publication number:
**WO 2023/175712 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Pioneer Corporation
Tokyo 113-0021 (JP)**
• **Pioneer Smart Sensing Innovations Corporation
Tokyo 113-0021 (JP)**

(72) Inventors:
• **KATO, Masahiro
Kawagoe-shi, Saitama 350-8555 (JP)**
• **MATSUZAKI, Shin
Kawagoe-shi, Saitama 350-8555 (JP)**
• **KATO, Masahiro
Kawagoe-shi, Saitama 350-8555 (JP)**

(74) Representative: **Viering, Jentschura & Partner
mbB
Patent- und Rechtsanwälte
Am Brauhaus 8
01099 Dresden (DE)**

(54) **INFORMATION PROCESSING APPARATUS, CONTROL METHOD, PROGRAM, AND STORAGE MEDIUM**

(57)     The controller 13 of the information processing device 11 includes at least an acquisition unit, a straight line calculation unit, and a distance calculation unit. The acquisition unit is configured to acquire measurement data, which is a set of data representing a plurality of measured points measured by a measurement device provided in a ship. The straight line calculation unit is configured to calculate, based on the measurement data, a straight line along a berthing place where the ship is berthed. The distance calculation unit is configured to calculate the distance between the ship and the berthing place based on the distance between the straight line and each of the measured points.

FIG. 14

```
                    START
S11   ACQUIRE POINT CLOUD DATA
      IN DIRECTION OF BERTHING PLACE
S12   CALCULATE NORMAL VECTORS, NUMBER OF NORMAL
      VECTORS, & VARIANCE
S13   IDENTIFY SURFACE IN FIELD OF VIEW & DETECTED
      SURFACE
S14   BERTHING SIDE STRAIGHT LINE
      CALCULATION PROCESS
S15   CALCULATE BERTHING PARAMETERS
      ( SHORE DISTANCE, APPROACH ANGLE, BERTHING SPEED)
S16   GENERATE RELIABILITY INFORMATION
S17   CONTROL SHIP BASED ON RELIABILITY INFORMATION
S18   BERTHED ?          No
               Yes
                    END
```

EP 4 495 912 A1

**Description**

TECHNICAL FIELD

The present disclosure relates to a process in berthing a ship at a shore.

BACKGROUND

Conventionally, there is known a technique for supporting berthing (getting ashore) a ship at a wharf. For example, Patent Literature 1 discloses an autonomous berthing device configured to autonomously control a ship to berth at a pier (wharf), wherein the autonomous berthing device controls the posture of the ship so that a lidar can receive a light emitted by the lidar and reflected by an object in the vicinity of the berthing place.

PRIOR ART DOCUMENTS

PATENT LITERATURE

Patent Literature 1: JP 2020-59403A

SUMMARY

PROBLEM TO BE SOLVED BY THE INVENTION

It is important to berth a ship safely and smoothly at a berthing place, and it is especially desired to realize a berthing support system for ship operation support and autonomous ship operation. Therefore, it is necessary to accurately calculate the distance to a berthing place to be reached.

The present disclosure has been made in order to solve the above issue, and it is an object of the present invention to provide an information processing device capable of accurately calculating the distance from a ship to a berthing place.

MEANS FOR SOLVING THE PROBLEM

One invention is an information processing device including:

an acquisition unit configured to acquire measurement data, which is a set of data representing a plurality of measured points measured by a measurement device provided in a ship;
a straight line calculation unit configured to calculate, based on the measurement data, a straight line along a berthing place where the ship is berthed; and
a distance calculation unit configured to calculate, based on the distance between the straight line and each of the measured points, a distance between the ship and the berthing place.

Another invention is a control method executed by a computer, the control method including:

acquiring measurement data, which is a set of data representing a plurality of measured points measured by a measurement device provided in a ship;
calculating, based on the measurement data, a straight line along a berthing place where the ship is berthed; and
calculating, based on the distance between the straight line and each of the measured points, a distance between the ship and the berthing place.

Still another invention is a program causing a computer to:

acquire measurement data, which is a set of data representing a plurality of measured points measured by a measurement device provided in a ship;
calculate, based on the measurement data, a straight line along a berthing place where the ship is berthed; and
calculate, based on the distance between the straight line and each of the measured points, a distance between the ship and the berthing place.

BRIEF DESCRIPTION OF THE DRAWINGS

[FIGS. 1A to 1C] FIGS. 1A to 1C schematically illustrate an operation support system.

[FIG. 2] It is a block diagram showing a hardware configuration of an information processing device.

[FIG. 3] It is a functional block diagram relating to the berthing support process.

[FIGS. 4A to 4C] FIG. 4A illustrates an example of the hull coordinate system with respect to the hull of the target ship.

FIG. 4B illustrates the lidar capturing a wharf to be reached.

FIG. 4C illustrates a perspective view of a structure with a clear indication of the normal vectors.

[FIGS. 5A to 5C] FIGS. 5A to 5C are diagrams showing a process flow of the first generation method.

[FIGS. 6A and 6B] FIG. 6A is a top view with a clear indication of the first berthing side straight line L1 and the nearest neighbor point p1.

FIG. 6B illustrates a unit vector u used for searching for the nearest neighbor point p1.

[FIGS. 7A to 7C] FIGS. 7A to 7C are diagrams showing a flow of a process of calculating a tentative straight line L' based on the nearest neighbor point p1 and the nearest neighbor point p2 and a process of calculating the distance to pier based on the tentative straight line L'.

[FIG. 8] It illustrates the flow of the process of calculating the tentative straight line L" obtained by updating the tentative straight line L'.

[FIGS. 9A to 9C] FIG. 9A is a diagram clearly showing the nearest neighbor points to be extracted.

FIG. 9B illustrates an example in which the data of the measured point with the shortest measured distance by the lidar is extracted as the nearest neighbor point.

FIG. 9C illustrates an example in which the point closest to the ship origin is extracted as the nearest neighbor point by comparing only the y coordinate values in the ship coordinate system.

[FIG. 10] It is a diagram showing the first berthing side straight line L1 and measured points of the side surface point cloud data generated by the front lidar.

[FIGS. 11A to 11C] FIGS. 11A to 11C illustrates a flow of the process when there is a berthing side straight line L generated within a predetermined time in the past.

[FIGS. 12A to 12C] FIGS. 12A to 12C illustrates a flow of the process when there is no berthing side straight line L generated within a predetermined time in the past.

[FIG. 13] It illustrates an example of the data structure of the reliability information.

[FIG. 14] It is an example of a flowchart showing an outline of the berthing support process in the embodiment.

[FIG. 15] It is an example of a flowchart of the berthing side straight line calculation process based on the first generation method.

[FIG. 16] It is an example of a flowchart of the berthing side straight line calculation process based on the second generation method.

[FIG. 17] It is a bird's-eye view of the target ship clearly showing the contour points.

[FIG. 18] It illustrates the distance from the contour points to the berthing side straight line by arrows.

[FIG. 19] It is a diagram showing the closest part and the shortest distance.

[FIG. 20] It indicates the indicators and degree of reliability included in the reliability information according to a modification.

[FIG. 21] It is a bird's-eye view of the target ship and berthing place clearly showing the indicators shown in FIG. 20.

DETAILED DESCRIPTION OF PREFERRED EMBODIMENTS

According to a preferred embodiment of the present invention, there is provided an information processing device including: an acquisition unit configured to acquire measurement data, which is a set of data representing a plurality of measured points measured by a measurement device provided in a ship; a straight line calculation unit configured to calculate, based on the measurement data, a straight line along a berthing place where the ship is berthed; and a distance calculation unit configured to calculate, based on the distance between the straight line and each of the measured points, a distance between the ship and the berthing place. According to this embodiment, based on the measurement data generated by the measurement device, the information processing device can suitably calculate the distance between the ship and the berthing place.

In one aspect of the information processing device, the information processing device further includes a nearest neighbor point search unit configured to search the measured points for a nearest neighbor point with respect to the ship, based on the straight line, wherein the distance calculation unit is configured to calculate the distance based on the nearest neighbor point. According to this aspect, the information processing device can suitably calculate the distance between the ship and the berthing place using the nearest neighbor point calculated based on the straight line.

In another aspect of the information processing device, the measurement device includes a first measurement device and a second measurement device, wherein the straight line calculation unit is configured to calculate a second straight line connecting a first nearest neighbor point, with respect to the ship, for which measured points of first measurement data measured by the first measurement device are searched based on the straight line and a second nearest neighbor point, with respect to the ship, for which measured points of second measurement data measured by the second measurement device are searched based on the straight line, and wherein the distance calculation unit is configured to calculate the distance based on the second straight line. According to this aspect, the information processing device can accurately calculate the straight line along the berthing place.

In still another aspect of the information processing device, the straight line calculation unit is configured, if the second straight line does not approximate the straight line calculated prior to the second straight line, to re-search for the first nearest neighbor point and the second nearest neighbor point based on the second straight line and calculate a third straight line connecting the first nearest neighbor point and the second nearest neighbor point which are re-searched for, wherein the distance calculation unit is configured to calculate the distance based on the third straight line. According to this aspect, the information processing device can more accurately calculate the straight line along the berthing place.

In still another aspect of the information processing device, the straight line calculation unit is configured to repeat re-searching for the first nearest neighbor point and the second nearest neighbor point and calculating the straight line until the calculated straight line has converged. According to this aspect, the information processing device can suitably calculate a straight line suitable as a straight line along the berthing place.

In still another aspect of the information processing device, if an indicator representing a dispersion in the measured points with respect to the straight line is equal to or larger than a threshold value, the straight line calculation unit is configured to calculate the straight line based on the nearest neighbor point for which the measured points are searched based on a straight line calculated by the straight line calculation unit before a current processing time. According to this aspect, even when there is a dispersion in the measurement data with respect to the straight line, the information processing device can accurately calculate the straight line along the berthing place.

In still another aspect of the information processing device, if an indicator representing a dispersion in the measured points with respect to the straight line is equal to or larger than a threshold value and there is no straight line calculated by the straight line calculation unit within a predetermined time before a current processing time, the straight line calculation unit is configured to calculate the straight line based on a nearest neighbor point for which the measured points are searched based on a straight line parallel to a direction of the ship. According to this aspect, even when a dispersion in the measurement data with respect to the straight line and there is no straight line calculated in the recent past, the information processing device can accurately calculate the straight line along the berthing place.

In still another aspect of the information processing device, the information processing device further includes: a shortest pier distance calculation unit configured to extract a contour point, which has a shortest length of a perpendicular line from the contour point to the straight line, among contour points of the ship and calculate a shortest distance from a hull of the ship to the berthing place; and a proximate portion identification unit configured to identify a part of the ship closest to the berthing place. According to this aspect, the information processing device can suitably calculate the shortest distance from the hull of the ship to the berthing place to thereby identify the part of the ship closest to the berthing place.

According to another preferred embodiment of the present invention, there is provided a control method executed by a computer, including: acquiring measurement data, which is a set of data representing a plurality of measured points measured by a measurement device provided in a ship; calculating, based on the measurement data, a straight line along a berthing place where the ship is berthed; and calculating, based on the distance between the straight line and each of the measured points, a distance between the ship and the berthing place. By executing this control method, the computer can suitably calculate the distance between the ship and the berthing place.

According to still another preferred embodiment of the present invention, there is provided a program causing a computer to: acquire measurement data, which is a set of data representing a plurality of measured points measured by a measurement device provided in a ship; calculate, based on the measurement data, a straight line along a berthing place where the ship is berthed; and calculate, based on the distance between the straight line and each of the measured points, a distance between the ship and the berthing place. The computer can suitably calculate the distance between the ship and the berthing place by executing this program. In some embodiments, the program is stored in a storage medium.

EMBODIMENTS

Hereinafter, preferred embodiments of the present invention are described below with reference to drawings.

(1) Overview of Driving Support System

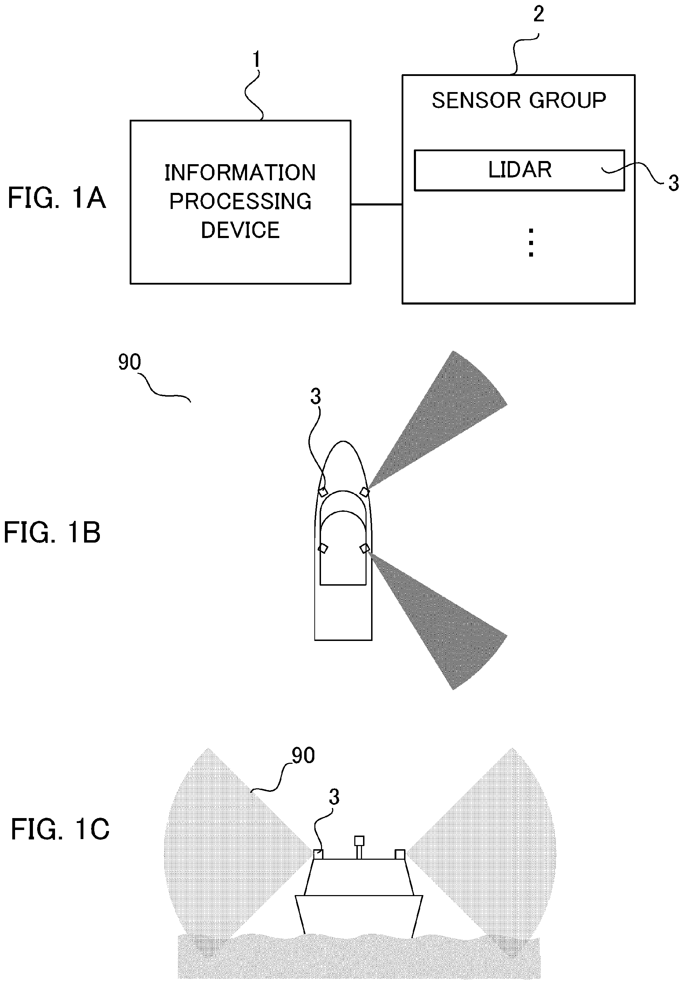

FIG. 1A to FIG. 1C are schematic configurations of an operation support system according to the present embodiment. Specifically, FIG. 1A shows a block configuration diagram of the operation support system, FIG. 1B is a top view illustrating the ship included in the operation support system and a field of view (also referred to as "measurement range" or "measurable range of distance") 90 of the lidar 3 to be described later, and FIG. 1C is a rear view of a ship and the field of view 90 of the lidar 3. The operation support system includes an information processing device 1 which moves together with the ship that is a moving body, and a sensor group 2 mounted on the ship. Hereafter, the ship equipped with the operation support system is also referred to as the "target ship".

The information processing device 1 is electrically connected to the sensor group 2 and supports the operation of the target ship based on the outputs from various sensors included in the sensor group 2. The ship operation support includes a berthing support such as automatic berthing. Here, "berthing" includes not only driving the target ship to come alongside a wharf but also driving the target ship to come alongside a structural object such as a pier. In the following, the term "berthing place" shall mean a generic term for any structural object subjected to berthing such as a wharf and a pier. The information processing device 1 may be a navigation device provided on a ship or an electronic control device built in a ship.

The sensor group 2 includes various external and internal sensors provided on the ship. For example, the sensor group 2 in the present embodiment include the lidar (Lidar: Light Detection and Ranging, or Laser Illuminated Detection And Ranging) 3.

The lidar 3 is an external sensor configured to emit pulse lasers within a predetermined angle range in the horizontal direction (see FIG. 1B) and in the vertical direction (see FIG. 1C) and thereby discretely measures the distance to an object existing in the external space and generates three dimensional point cloud data indicative of the position of the object.

The lidar 3 is equipped with a radiation unit for radiating a laser beam while changing the irradiation direction, a light receiving unit for receiving the reflected light (scattered light) of the radiated laser beam, and an output unit for outputting data based on the received light signal outputted by the light receiving unit. Each data measured for each irradiation direction of the pulsed laser is generated based on the irradiation direction corresponding to the laser beam received by the light receiving unit and the response delay time of the laser beam which is identified by the received light signal described above. Hereafter, a point or its data measured through irradiation with the laser beam within the measurement range of the lidar 3 is also referred to as "measured point".

In the examples shown in FIG. 1B and FIG. 1C, as the lidar 3, a lidar directed toward the front port of the target ship, a lidar directed toward the rear port of the target ship, a lidar directed toward the front starboard of the target ship, and a lidar directed toward the rear starboard of the target ship are respectively provided on the ship. Then, when the target ship approaches the berthing place, the point cloud data of the measured berthing place will be respectively generated by the front lidar 3 and the rear lidar 3 provided at the berthing side of the target ship at the berthing place. Hereafter, the lidar 3 in front which measures the berthing place is referred to as "front lidar", and the lidar 3 in the rear which measures the berthing place is referred to as "rear lidar". The front lidar and the rear lidar are examples of the first measurement device and the second measurement device, respectively. The arrangement of the lidars 3 is not limited to the example shown in FIG. 1B and FIG. 1C.

The lidar 3 is not limited to the scan type lidar described above, and it may be a flash type lidar which generates three-dimensional data by diffusing radiating laser beams to the field of view of the two-dimensional sensor array. The lidar 3 is an example of the "measurement device" in the present invention.

(2) Configuration of Information Processing Device

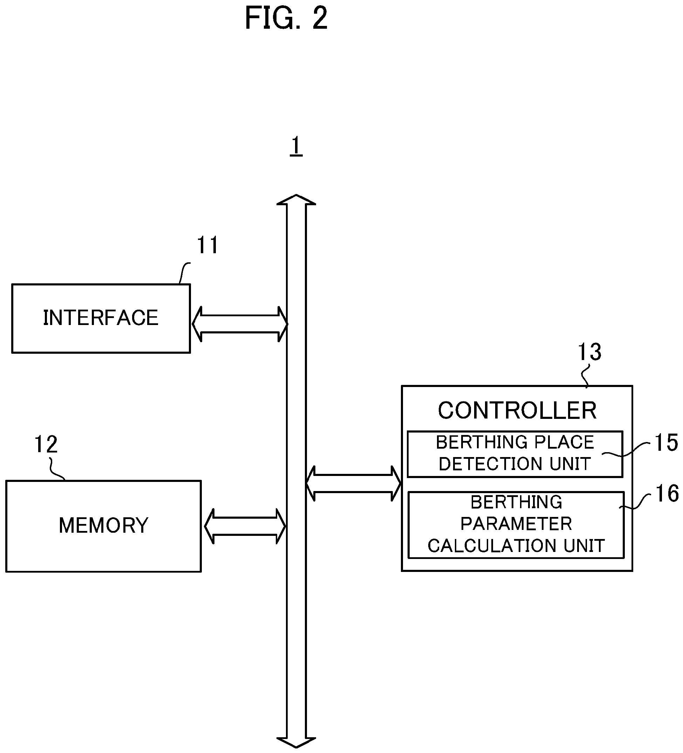

FIG. 2 is a block diagram illustrating an example of a hardware configuration of the information processing device 1. The information processing device 1 mainly includes an interface 11, a memory 12, and a controller 13. Each of these elements is connected to each other through a bus line.

The interface 11 performs the interface operation related to the transfer of data between the information processing device 1 and an external device. In the present embodiment, the interface 11 acquires and supplies output data from each sensor of the sensor group 2 to the controllers 13. For example, the interface 11 also supplies signals relating to the control of the target ship generated by the controller 13 to each component of the target ship to control the operation of the target ship. For example, the target ship includes a driving source such as an engine or an electric motor, a screw for generating a propulsive force in the traveling direction based on the driving force from the driving source, a thruster for generating a lateral propulsive force based on the driving force from the driving source, and a rudder which is a mechanism for controlling the traveling direction of the target ship. Then, during an autonomous driving operation such as autonomous berthing, the interface 11 supplies a control signal generated by the controller 13 to each of these components. In the case where an electronic control device is provided in the target ship, the interface 11 supplies a control signal generated by the controller 13 to the electronic control device. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, and a sound output device.

The memory 12 is configured by various volatile and non-volatile memories such as a RAM (Random Access Memory), a ROM (Read Only Memory), a hard disk drive, and a flash memory. The memory 12 stores a program for the controller 13 to perform a predetermined process. The program executed by the controller 13 may be stored in a storage medium other than the memory 12.

In addition, the memory 12 stores information necessary for processing to be performed by the information processing device 1 in the present embodiment. For example, the memory 12 may store map data including information regarding the position of the berthing place. In another example, the memory 12 stores information regarding the size of the down-sampling if the down-sampling is applied to the point cloud data which is obtained during every cycle of the scanning by the lidar 3.

The controller 13 includes one or more processors, such as a CPU (Central Processing Unit), a GPU (Graphics Processing Unit), and a TPU (Tensor Processing Unit), and controls the entire information processing device 1. In this case, by executing a program stored in the memory 12 or the like, the controller 13 performs processing related to the operation support or the like of the target ship.

The controller 13 functionally includes a berthing place detection unit 15 and a berthing parameter calculation unit 16. The berthing place detection unit 15 performs processing related to the detection of the berthing place based on the point cloud data outputted by the lidar 3. The berthing parameter calculation unit 16 calculates parameters (also referred to as "berthing parameters") necessary for berthing the target ship at the berthing place. Here, the berthing parameters include the distance (the pier distance) from the target ship to the berthing place, the approach angle of the target ship to the berthing place, and the speed (berthing speed) at which the target ship approaches the berthing place. Further, on the basis of the processing result from the berthing place detection unit 15 and the berthing parameters, the berthing parameter calculation unit 16 calculates information (also referred to as "reliability information") representing the degree of reliability regarding berthing to the berthing place. Then, the controller 13 functions as the "acquisition unit", "straight line calculation unit", "nearest neighbor point search unit", "distance calculation unit", and a computer or the like for executing the program.

The controller 13 is not limited to be implemented by software using a program, it may be implemented by any combination of hardware, firmware, software and/or the like. The controller 13 may also be a user-programmable integrated circuit, such as a FPGA (Field-Programmable Gate Array) and a microcontroller, an ASSP (Application Specific Standard Produce) and an ASIC (Application Specific Integrated Circuit). In this case, the program executed by the controller 13 according to the embodiment may be implemented by using the above-mentioned integrated circuit.

(3) Outline of Berthing Support Process

Next, an outline of the berthing support processing executed by the information processing device 1 will be described. Based on the point cloud data generated by the front lidar and the point cloud data generated by the rear lidar, the information processing device 1 generates a straight line (also referred to as "berthing side straight line L") along the side surface of the berthing place. Then, the information processing device 1 calculates the berthing parameters such as the pier distance based on the berthing side straight line L.

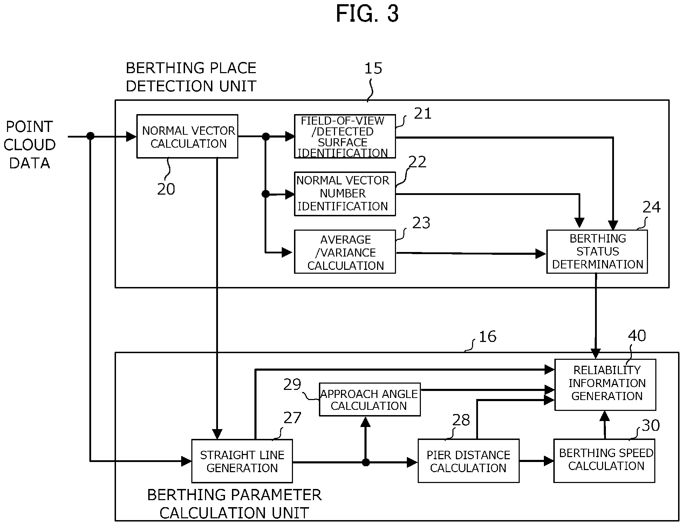

FIG. 3 is a functional block diagram of the berthing place detection unit 15 and the berthing parameter calculation unit 16 relating to the berthing support process. The berthing place detection unit 15 functionally includes a normal vector calculation block 20, a field-of-view / detected surface identification block 21, a normal vector number identification block 22, an mean / variance calculation block 23, and a berthing status determination block 24. The berthing parameter calculation unit 16 functionally includes a straight line generation block 27, a pier distance calculation block 28, an approach angle calculation block 29, a berthing speed calculation block 30, and a reliability information generation block 40.

On the basis of the point cloud data generated by the lidars 3 in the direction in which the berthing place exists, the normal vector calculation block 20 calculates a normal vector of a plane (also referred to as "berthing plane") formed by the berthing place. In this case, for example, the normal vector calculation block 20 calculates the normal vector based on the point cloud data generated by the front lidar and rear lidar, which include the berthing side with respect to the the target ship in their measurement range. Information on the measurement range of the lidars 3 and the direction of the berthing place may be registered in advance in the memory 12, for example.

In this case, in some embodiments, the normal vector calculation block 20 may apply a down sampling to the point cloud data and remove the data (also referred to as "water surface reflection data") generated through the reflection of the laser beam at the water surface.

In this case, first, among the point cloud data generated by the lidars 3, the normal vector calculation block 20 identifies data indicating the position below the water surface position as the water surface reflection data (i.e., erroneous detection data) and removes the data from the point cloud data. For example, the normal vector calculation block 20 estimates the water surface position based on the mean value in the height direction of the point cloud data generated by the lidars 3 in such a condition that there is no object other than the water surface in the vicinity. Then, the normal vector calculation block 20 applies a down-sampling, which is a process of integrating the measured points for each grid space with a predetermined size, to the point cloud data after removing the water surface reflection data. Then, with respect to each measured point indicated by the point cloud data after the down-sampling, the normal vector calculation block 20 calculates the normal vector using a plurality of measured points in the vicinity of the each measured point. In some embodiments, the down-sampling may be performed before removal of data reflected at the water surface.

The field-of-view / detected surface identification block 21 identifies the surface (also referred to as "surface in the field of view") of the berthing place existing within the field of view of the lidars 3 and the surface (also referred to as "detected surface") of the berthing place detected based on the normal vectors calculated by the normal vector calculation block 20. In this case, the field-of-view / detected surface identification block 21 identifies whether or not the surface in the field of view and the detected surface each includes the upper surface and/or the side surface of the berthing place.

The normal vector number identification block 22 extracts, from the normal vectors calculated by the normal vector calculation block 20, the normal vector(s) in the vertical direction and the normal vector(s) in the direction (i.e., the horizontal direction) perpendicular thereto. Then, the normal vector number identification block 22 counts the number of the normal vectors in the vertical direction and the number of the normal vectors in the horizontal direction. Here, the normal vector number identification block 22 identifies the normal vectors in the vertical direction as the normal vectors of measured points on the upper surface of the berthing place and identifies the normal vectors in the horizontal direction as the normal vectors of measure points on the side surface of the berthing place and uses the above-mentioned numbers of the normal vectors as an indicator of the reliability regarding the berthing place.

The mean / variance calculation block 23 extracts, from the normal vectors calculated by the normal vector calculation block 20, the normal vector(s) in the vertical direction and the normal vector(s) in the vertical direction (i.e., the horizontal direction), and calculates the mean and variance of the normal vectors in the vertical direction and the mean and variance of the normal vectors in the horizontal direction.

The berthing status determination block 24 acquires the processing results, which are identified or calculated based on the same point cloud data, from the field-of-view / detected surface identification block 21, the normal vector number identification block 22, and the mean / variance calculation block 23, as the determination results representing the detection status of the berthing place in generating the point cloud data. The berthing state determination block 24 supplies the processing results from the field-of-view / detected surface identification block 21, the normal vector number identification block 22, and the mean / variance calculation block 23 to the berthing parameter calculation unit 16 as the determination results of the detection status of the berthing place.

Based on the processing result of the normal vector calculation block 20, the straight line calculation block 27 extracts point cloud data (also referred to as "side surface point cloud data") constituting the side surface of the berthing place from the point cloud data generated by the front lidar and the point cloud data generated by the rear lidar, respectively. For example, the straight line calculation block 27 extracts, as the side surface point cloud data, the data corresponding to the measured points having normal vectors oriented in the horizontal direction. Then, the straight line calculation block 27 generates a berthing side straight line L (in detail, an expression representing a straight line) based on the nearest neighbor point, which is obtained by searching the side surface point cloud data of the front lidar, and the nearest neighbor point, which is obtained by searching the side surface point cloud data of the rear lidar. Details of the calculation method of the berthing side straight line L will be described later.

The pier distance calculation block 28 calculates the pier distance corresponding to the shortest distance between the target ship and the berthing place, based on the berthing side straight line L generated by the straight line expression generation block 27. Here, for example, the pier distance calculation block 28 calculates, as the pier distance, the shortest distance between the berthing side straight line L and each lidar 3 (i.e., each of the front lidar and the rear lidar). In some embodiments, the pier distance calculation block 28 may calculate, as the pier distance, the shortest distance from the reference point of the ship such as the ship center position to the berthing side straight line L. The pier distance calculation block 28 may identify one of the shortest distances for respective lidars 3, whichever is shorter, as the pier distance, or may identify the mean of the shortest distances as the pier distance, instead of identifying the shortest distance for each lidar 3 as the pier distance.

Based on the berthing side straight line L generated by the straight line generation block 27, the approach angle calculation block 29 calculates the angle of approach of the target ship with respect to the berthing place. Specifically, the approach angle calculation block 29 calculates the approach angle using "atan2", which is a function to obtain the arctangent from two arguments defining the tangent. More specifically, the approach angle calculation block 29 calculates the approach angle by calculating the function "atan2" from the directional vector in the berthing side straight line L.

The berthing speed calculation block 30 calculates the berthing speed, which is the speed of the target ship in approaching the berthing place, based on the pier distance calculated by the pier distance calculation block 28. For example, the berthing speed calculation block 30 calculates the time rate of change in the pier distance (the shortest distance) as the berthing speed.

The reliability information generation block 40 generates the reliability information on the basis of the processing results from the berthing state determination block 24, the straight line generation block 27, the pier distance calculation block 28, and the approach angle calculation block 29. Details of the reliability information will be described later.

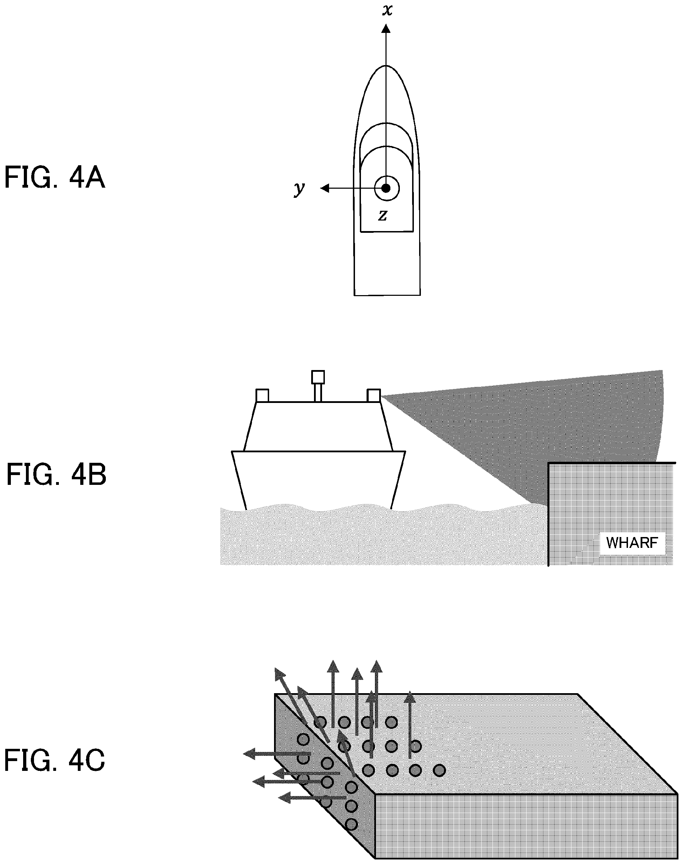

Next, a specific example of the process executed by the normal vector calculation block 20, the normal vector number identification block 22, and the mean / variance calculation block 23 will be described with reference to FIGS. 4A to 4C.

FIG. 4A shows an example of a hull coordinate system with respect to the hull of the target ship. As shown in FIG. 4A, hereinafter, the front (forward) direction of the target ship is set as the "x" coordinate, the side direction of the target ship is set as the "y" coordinate, and the height direction of the target ship is set as the "z" coordinate. Then, the measurement data, which is measured by the lidar 3, having the coordinate system with respect to the lidar 3 is converted into data in the hull coordinate system shown in FIG. 4A. The process of converting the point cloud data having the coordinate system with respect to the lidar installed in the moving body into data in the coordinate system with respect to the moving body is disclosed in PCT International Publication WO2019/188745, for example.

FIG. 4B shows the lidar 3 capturing a wharf, which is a berthing place. FIG. 4C is a perspective view of the berthing place (wharf, in this case) with a clear indication of measured points, which represent measured positions of the wharf that is a berthing place measured by the lidar 3, and normal vectors calculated on the basis of the measured points. In FIG. 4C, each measured point is indicated by a circle, and each normal vector is indicated by an arrow. Here, an example in which both the upper surface and the side surface of the wharf were measured by the lidar 3 is shown.

As shown in FIG. 4C, the normal vector calculation block 20 calculates the normal vectors for respective measured points on the side surface and the upper surface of the wharf. Since the normal vector is a vector perpendicular to the plane or curved plane of interest, it is calculated using a plurality of measured points configurable as a plane. Therefore, a grid with predetermined vertical and horizontal lengths or a circle with a predetermined length of radius is set and the normal vector is calculated using measured points existing within the grid or the circle. In this case, the normal vector calculation block 20 may calculate the normal vector for each measured point or, may calculate the normal vector at an interval of a predetermined distance. Then, the normal vector number identification block 22 identifies a normal vector whose z component is larger than a predetermined threshold value as a normal vector oriented in the vertical direction. The normal vector is assumed to be converted into a unit vector. In contrast, the normal vector number identification block 22 identifies a normal vector whose z component is less than a predetermined threshold value as a normal vector oriented in the horizontal direction. The normal vector number identification block 22 counts the number (five in this case) of normal vectors oriented in the vertical direction and the number (four in this case) of the normal vector oriented in the horizontal direction. Furthermore, the mean / variance calculation block 23 calculates the mean and variance of the normal vectors oriented in the vertical direction and the mean and variance of the normal vectors oriented in the horizontal direction. It is noted that the normal vectors around the edge are oriented in diagonal direction since the measured points in the vicinity are on the side surface or the upper surface.

(4) Details of Method of Generating Berthing Side Straight Line

Next, methods (first generation method and a second generation method) for generating the berthing side straight line L will be described.

(4-1) First Generation Method

In the first generation method, the berthing parameter calculation unit 16 first generates a tentative berthing side straight line L (also referred to as "first berthing side straight line L1") based on the side surface point cloud data of the front lidar while generating a tentative berthing side straight line L (also referred to as "second berthing side straight line L2") based on the side surface point cloud data of the rear lidar. Then, based on the first berthing side straight line L1, the berthing parameter calculation unit 16 searches the side surface point cloud data of the front lidar for the nearest neighbor point. In contrast, based on the second berthing side straight line L2, it searches the side surface point cloud data of the rear lidar for the nearest neighbor point. Thereafter, the berthing parameter calculation unit 16 generates a straight line connecting these nearest neighbor points, and then searches for the nearest neighbor points by the same procedure again using the generated straight line, and generates a straight line connecting the nearest neighbor points searched for. Then, upon determining that there is no substantial variation in the equation representing the generated straight line and the equation has converged, the berthing parameter calculation unit 16 sets the straight line after convergence as the berthing side straight line L. Through the above-mentioned process, the berthing parameter calculation unit 16 extracts the measured point representing a peak part of the berthing place as the nearest neighbor point to suitably identify a straight line passing through the peak part of the berthing place as the berthing side straight line L. As described later, the process of repeatedly calculating the straight line may be executed and continued only when there is an enough time until the subsequent output time (i.e., the subsequent processing time determined based on the frame cycle of the point cloud data) of point cloud data.

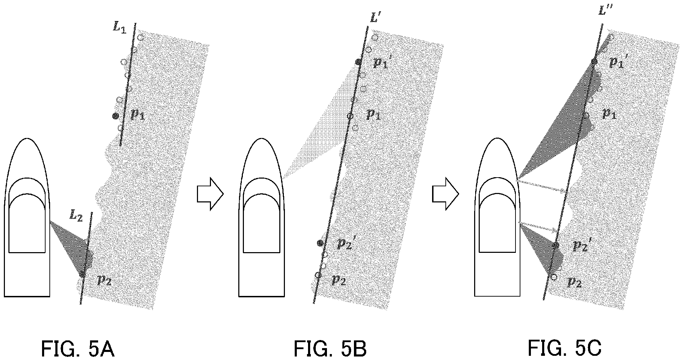

FIGS. 5A to 5C are diagrams illustrating the processing flow of the first generation method. First, as illustrated in FIG. 5A, the berthing parameter calculation unit 16 generates the first berthing side straight line L1 based on the side surface point cloud data of the front lidar and extracts the nearest neighbor point "p1" closest to the target ship from the measured points of the side surface point cloud data of the front lidar using the first berthing side straight line L1. In the same way, the berthing parameter calculation unit 16 generates the second berthing side straight line L2 based on the side surface point cloud data of the rear lidar and extracts the nearest neighbor point "p2" closest to the target ship from the measured point of the side surface point cloud data of the rear lidar using the second berthing side straight line L2.

Next, as illustrated in FIG. 5B, the berthing parameter calculation unit 16 generates a tentative straight line" L'" connecting the nearest neighbor point p1 and the nearest neighbor point p2. Then, it extracts the nearest neighbor point "p'1" from the measured points of the side surface point cloud data of the front lidar using the tentative straight line L', and extracts the nearest neighbor point "p'2" from the measured point of the side surface point cloud data of the rear lidar using the tentative straight line L'. Then, as shown in FIG. 5C, the berthing parameter calculation unit 16 generates a straight line "L"" connecting the nearest neighbor point p'1 and the nearest neighbor point p'2, and sets the finally calculated tentative straight line L" as the berthing side straight line L since the tentative straight line L" approximates the tentative straight line L'. In determining the approximation of the tentative straight line L" to the tentative straight line L', for example, the berthing parameter calculation unit 16 calculates the element-to-element differences, for respective x, y, and z, between the unit vectors and then determines that the approximation is detected if the maximum value of the differences is equal to or larger than a threshold value. In contrast, if the maximum value is smaller than the threshold value, it determines that the approximation is not detected. Thereafter, the berthing parameter calculation unit 16 calculates the pier distance based on the berthing side straight line L. The tentative straight line L' is an example of the "first straight line" and the tentative straight line L" is an example of the "second straight line". Further, the nearest neighbor point p1 and the nearest neighbor point p'1 are examples of the "first nearest neighbor point", and the nearest neighbor point p2 and the nearest neighbor point p'2 are examples of the "second nearest neighbor point".

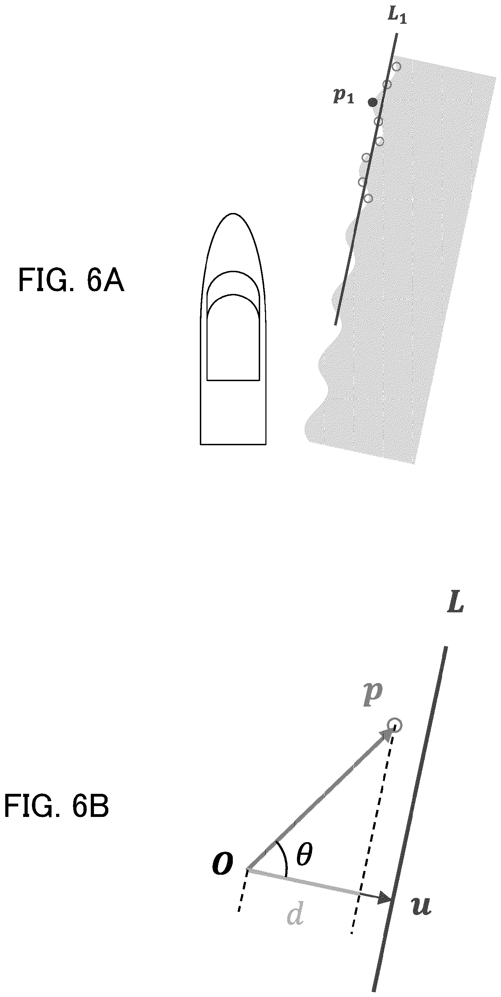

Here, the detailed calculation method of the nearest neighbor point p1 shown in FIG. 5A will be described with reference to FIG. 6A and FIG. 6B. FIG. 6A is a top view clearly showing the first side straight line L1 and the nearest neighbor point p1, and FIG. 6B is a view clearly showing the unit vector "u" used for searching for the nearest neighbor point p1.

First, the berthing parameter calculation unit 16 generates the first berthing side straight line L1 shown in the following equation (1) by applying the principal component analysis or the least squares method to the side surface point cloud data of the front lidar.

[Math Expression 1]

$$L1: \begin{bmatrix} L_x \\ L_y \\ L_z \end{bmatrix} = \begin{bmatrix} x_0 \\ y_0 \\ z_0 \end{bmatrix} + t \begin{bmatrix} a \\ b \\ c \end{bmatrix} \quad (1)$$

Here, "$[x_0 \ y_0 \ z_0]^T$" indicates the center of gravity of the measured points indicated by the side surface point cloud data of the front lidar, "$[a \ b \ c]^T$" indicates the directional vector, and "t" indicates a parameter. For example, when a principal component analysis is applied, the eigenvector corresponding to the largest eigenvalue is the directional vector of the first berthing side straight line L1.

Then, the berthing parameter calculation unit 16 calculates the unit vector u that is perpendicular to the first berthing side straight line L1 in the two-dimensional plane as shown in the following equation (2).

[Math Expression 2]

$$u = \frac{1}{\sqrt{a^2 + b^2}} \begin{bmatrix} b \\ -a \end{bmatrix} = \begin{bmatrix} u_x \\ u_y \end{bmatrix} \quad (2)$$

The inner product of the (x,y) component of the data p, which represents the measured points of the side surface point cloud data of the front lidar, and the unit vector u corresponds to the projection of the data p onto the vector u. Accordingly, the following equation (3) regarding the distance "d" shown in FIG. 6B is established.

[Math Expression 3]

$$p \cdot u = |p||u| \cos \theta = |p| \cos \theta = d \quad (3)$$

Therefore, the berthing parameter calculation unit 16 calculates the distance d based on the following equation (4).
[Math Expression 4]

$$d = p_x u_x + p_y u_y \qquad (4)$$

Then, the berthing parameter calculation unit 16 calculates the distance based on the equation (4) for each measured point represented by the side surface point cloud data of the front lidar, and extracts the data of the measured point indicating the shortest distance among them as the nearest neighbor point p1. Similarly, the berthing parameter calculation unit 16 calculates the distance based on the equation (4) for each measured points represented by the side surface point cloud data of the rear lidar, and extracts the data of the measured point indicating the shortest distance among them as the nearest neighbor point p2.

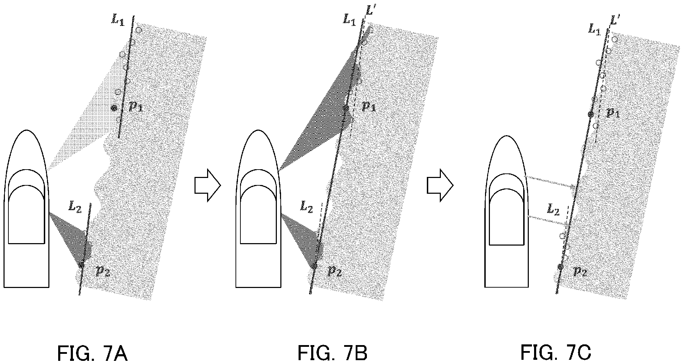

Next, supplementary description will be given of the tentative straight line L' based on the nearest neighbor point p1 and the nearest neighbor point p2. FIG. 7A to FIG. 7C are diagrams showing the processing flow of calculating the tentative straight line L' based on the nearest neighbor point p1 and the nearest neighbor point p2 and calculating the pier distance based on the tentative straight line L'. FIG. 7A is a diagram showing the nearest neighbor point p1 identified based on the first berthing side straight line L1 and the nearest neighbor point p2 identified based on the second berthing side straight line L2. Then, FIG. 7B is a diagram showing a tentative straight line L' connecting the nearest neighbor point p1 and nearest neighbor point p2. FIG. 7C shows the process of calculating the length of the perpendicular line from the position of the front lidar to the tentative straight line L', and the length of the perpendicular line from the position of the rear lidar to the tentative straight line L', respectively, as the pier distance.

Here, as shown in FIG. 7A to FIG. 7C, the tentative straight line L' connecting the nearest neighbor point p1, for which the side surface point cloud data of the front lidar is searched, and the nearest neighbor point p2, for which the side surface point cloud data of the rear lidar is searched, is substantially parallel to the side surface of the berthing place. Therefore, by using such a tentative straight line L' as the berthing side straight line L, the information processing device 1 can accurately calculate various berthing parameters such as the pier distance. It is noted that either the nearest neighbor point p1 or nearest neighbor point p2, which are points on the berthing side straight line L, needs to be set as the point p shown in FIG. 6B in order to determine the length of the perpendicular line to the berthing side straight line L and it can be calculated by the equation (4).

In some embodiments, if there is an enough time to the subsequent output time of the point cloud data, the berthing parameter calculation unit 16 performs a process of updating the tentative straight line L' in order to obtain a more accurate berthing side straight line L. In this case, for example, if the time length from the current time to the subsequent output time of the point cloud data is equal to or greater than a predetermined threshold value, the berthing parameter calculation unit 16 determines that there is an enough time (temporal margin) till the subsequent output time of the point cloud data.

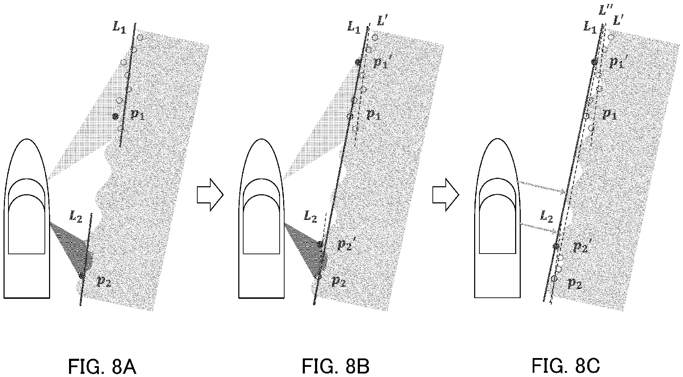

FIG. 8A to 8C show the processing flow to calculate the tentative straight line L" obtained by updating the tentative straight line L'. FIG. 8A is a diagram showing the nearest neighbor point p1 searched for based on the first berthing side straight line L1 and the nearest neighbor point p2 searched for based on the second berthing side straight line L2. FIG. 8B is a diagram illustrating: a tentative straight line L' connecting the nearest neighbor point p1 and the nearest neighbor point p2; a nearest neighbor point p'1 for which the side surface point cloud data of the front lidar is searched based on the tentative straight line L'; and a nearest neighbor point p'2 for which the side surface point cloud data of the rear lidar is searched based on the tentative straight line L'. FIG. 8C shows a tentative straight line L" connecting the nearest neighbor point p'1 and the nearest neighbor point p'2.

In this case, the berthing parameter calculation unit 16 compares each directional vector of the first berthing side straight line L1 and the second berthing side straight line L2 with the directional vector of the tentative straight line L'. Then, upon determining that every difference between the directional vectors is equal to or larger than a predetermined threshold value, the berthing parameter calculation unit 16 determines that the tentative straight line L' needs to be updated because the process has not converged yet. Therefore, in this case, using the tentative straight line L' as shown in FIG. 8B, the berthing parameter calculation unit 16 searches the side surface point cloud data of the front lidar for the nearest neighbor point p'1 while searching the side surface point cloud data of the rear lidar for the nearest neighbor point p'2. Then, as shown in FIG. 8C, the berthing parameter calculation unit 16 calculates the tentative straight line L" connecting the nearest neighbor point p'1 and the nearest neighbor point p'2, and calculates the pier distance using the tentative straight line L" as the berthing side straight line L. It can be seen that the arrows indicative of the two pier distances in FIG. 8C are more accurate than the arrows in FIG. 7C. In this way, the berthing parameter calculation unit 16 can calculate the berthing side straight line L more accurately and accurately calculate various berthing parameters such as the pier distance.

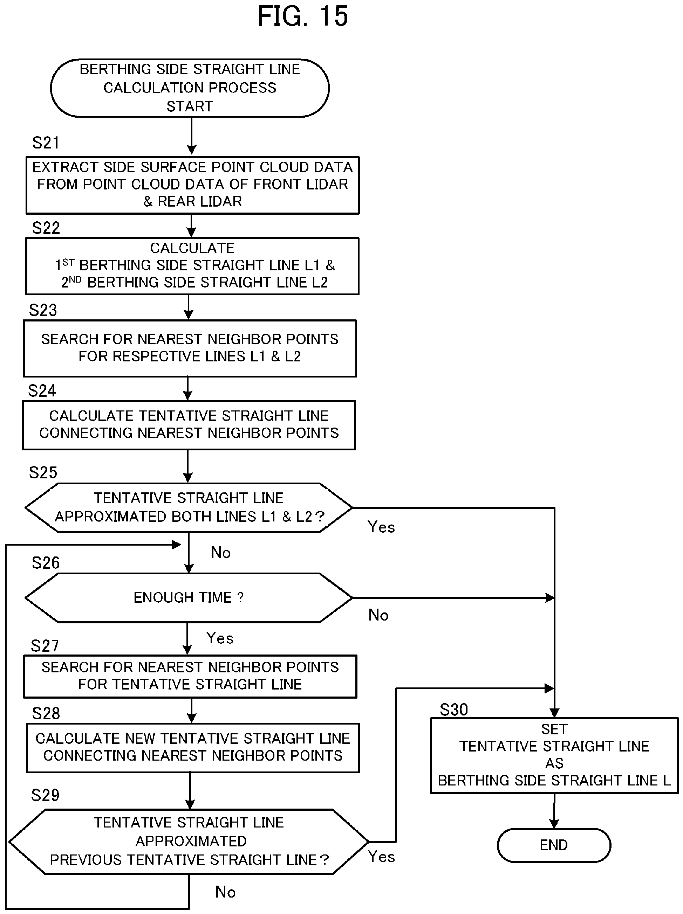

The detailed processing flow of the first generation method will be described later with reference to FIG. 15.

Here, the effect of the first generation method will be described in supplementary. Generally, in order to obtain the pier distance, it is necessary to extract the point (i.e., nearest neighbor point), which is closest to the peak of the berthing place in the two-dimensional plane, from the point cloud data obtained by radiating the berthing place. On the other hand, depending on the measurement direction of the lidar 3 and the orientation of the ship with respect to the berthing place, the nearest neighbor point cannot be extracted accurately through the simple comparison of the distance from the lidar 3 to each measured point.

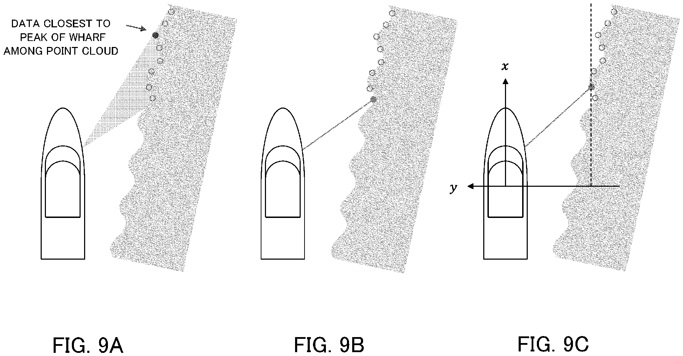

FIG. 9A is a diagram clearly showing the nearest neighbor point to be extracted. FIG. 9B shows an example in which data corresponding to the measured point with the shortest distance measured by the lidar 3 is extracted as the nearest neighbor point. In addition, FIG. 9C shows an example in which only the y-coordinate values in the ship coordinate system are compared to extract the point closest to the ship origin as the nearest neighbor point. The point (see FIG. 9A) at the position closest to the peak of the wharf cannot be accurately extracted as the nearest neighbor point if the method (see FIG. 9B) for extracting the data corresponding to the measured point with the shortest distance measured by the lidar 3 as the nearest neighbor point or the method (see FIG. 9C) for comparing only the y-coordinate values in the ship coordinate system to extract the point closest to the ship origin as the nearest neighbor point. In consideration of the above, in the first generation method, the berthing parameter calculation unit 16 searches for the nearest neighbor point p1 selected using the first berthing side straight line L1 based on the point cloud data of the front lidar and the nearest neighbor point p2 selected using the second berthing side straight line L2 based on the point cloud data of the rear lidar, respectively, and calculates the straight line connecting these points. As a result, since the berthing side straight line L passing through the peaks of the berthing place can be generated, various berthing parameters such as the pier distance can be accurately calculated. In addition, even if the berthing place is a quay with poor flatness, it is possible to generate the berthing side straight line L passing through the peaks of the berthing place by repeatedly executing the process of updating the straight line.

(4-2) Second Generation Method

In the second generation method, after computing the first berthing side straight line L1 and the second berthing side straight line L2, the berthing parameter calculation unit 16 searches for the nearest neighbor point on the basis of the berthing side straight line L calculated in the past if the variance in the side surface point cloud data with respective to the straight lines is equal to or larger than a predetermined threshold value. It is noted that the term "variance" is an example of the "indicator representing a dispersion", and hereinafter, standard deviation may be used in place of the variance.

Generally, if the wharf captured by the lidar 3 is a berthing place with poor flatness, the dispersion in the side surface point cloud data will increase and the berthing side straight line L generated therefrom will become inaccurate. If the side surface straight line L is generated on the basis of the side surface point cloud data for the berthing place with poor flatness, the variance in the measured points represented by the side surface point cloud data with respect to the side surface straight line L will become large.

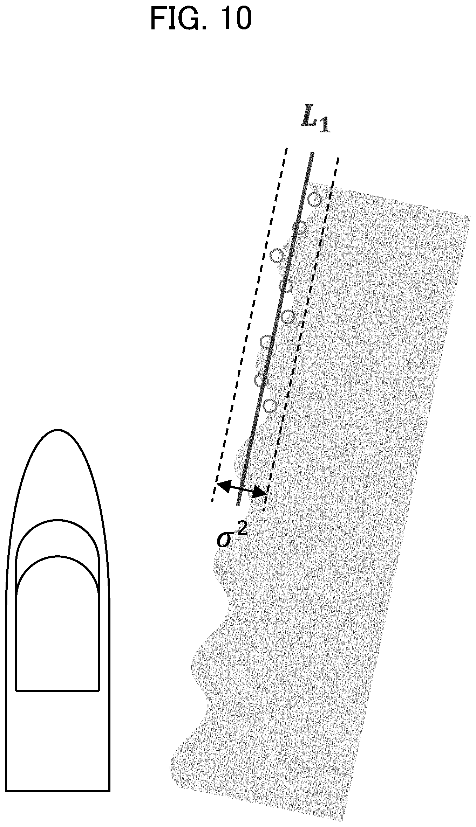

In consideration of the above, in the second generation method, if the standard deviation of respective points of the side surface point cloud data obtained at the current process time with respect to the first berthing side straight line L1 and the second berthing side straight line L2 is equal to or larger than a predetermined threshold value (for example, $\sigma >$ 0.5), the berthing side parameter calculation unit 16 does not calculate the berthing side straight line L based on the side surface point cloud data. FIG. 10 illustrates the first berthing side straight line L1 with indication of measured points of the side surface point cloud data of the front lidar. In FIG. 10, "$\sigma^2$" representing the variance in the measured points of the side surface point cloud data of the front lidar with respect to the first berthing side straight line L1 is clearly shown.

Then, if there is a berthing side straight line L generated within a last predetermined time in the past (e.g., within the last one second), the berthing parameter calculation unit 16 searches for the nearest neighbor point based on the past berthing side straight line L and calculates the berthing side straight line L at the current processing time. On the other hand, if there is no berthing side straight line L generated within a last predetermined time in the past (for example, within the last one second), the berthing parameter calculation unit 16 searched for the nearest neighbor points based on a straight line parallel to the direction of the target ship and calculates the berthing side straight line L at the current processing time.

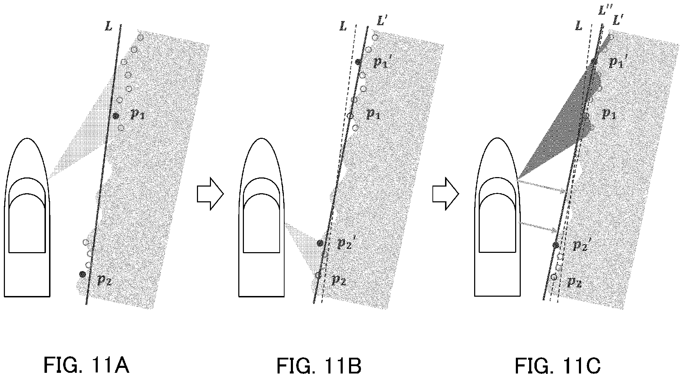

FIGS. 11A to 11C are diagrams illustrating the processing flow when there is a berthing side straight line L generated within the last predetermined time in the past.

First, as shown in FIG. 11A, if there is a past berthing side line L generated within the last predetermined time, the berthing parameter calculation unit 16 searches the side surface point cloud data of the front lidar for the nearest neighbor point p1 and searches the side surface point cloud data of the rear lidar for the nearest neighbor point p2, respectively, on the basis of the past berthing side straight line L. In this instance, the berthing parameter calculation unit 16 determines the nearest neighbor point p1 and the nearest neighbor point p2 by calculating the distances to the respective measured points using a vector perpendicular to the directional vector of the previous berthing side straight line L.

Next, as shown in FIG. 11B, the berthing parameter calculation unit 16 generates a tentative straight line L' connecting the nearest neighbor point p1 and the nearest neighbor point p2, and searches the side surface point cloud data of the front lidar and the side surface point cloud data of the rear lidar for the nearest neighbor point p'1 and the nearest neighbor point p'2, respectively, on the basis of the tentative straight line L'. Furthermore, the berthing parameter calculation unit 16 generates a tentative straight line L" passing through the nearest neighbor point p'1 and the nearest neighbor point p'2, as shown in FIG. 11C. After that, if the tentative straight line L" does not approximate the tentative straight line L', the berthing parameter calculation unit 16 repeats the process of re-searching for the nearest neighbor point by the same procedure using the tentative straight line L" and generating a straight line connecting the nearest neighbor points searched for. On the other hand, upon determining that there is no change in the equation of the generated straight line and therefore the equation has converged (i.e., the straight lines before and after the update approximate each other), the berthing parameter calculation unit 16 sets the straight line after convergence as the berthing side straight line L, and performs the calculation of the pier distance and the like. Then, in the example shown in FIG. 11A to FIG. 11C, it can be seen that the nearest neighbor point gradually approaches the peak part of the wharf, and the straight line approaches the straight line passing through the peak part of the wharf.

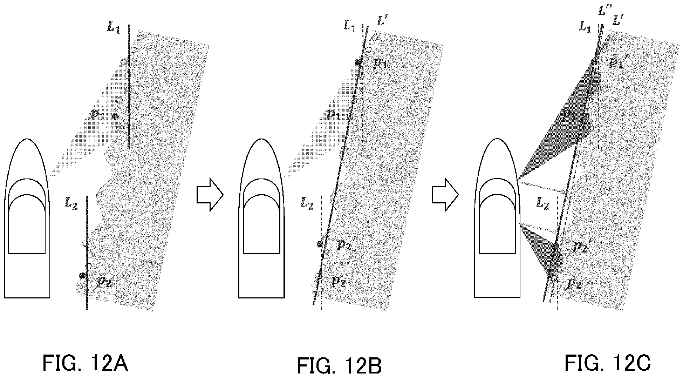

FIGS. 12A to 12C are diagrams illustrating the processing flow in the case where there is no berthing side straight line L generated within the last predetermined time in the past.

In this instance, as illustrated in FIG. 12A, the berthing parameter calculation unit 16 sets straight lines parallel to the direction of the target ship as the first berthing side straight line L1 and the second berthing side straight line L2, respectively, and searches for the nearest neighbor point p1 and the nearest neighbor point p2 based on the first berthing side straight line L1 and the second berthing side straight line L2, respectively. Next, as shown in FIG. 12B, the berthing parameter calculation unit 16 generates a tentative straight line L' connecting the nearest neighbor point p1 and the nearest neighbor point p2, based on the tentative straight line L', and searches the side surface point cloud data of the front lidar and the side surface point cloud data of the rear lidar for the nearest neighbor point p'1 and the nearest neighbor point p'2, respectively. Furthermore, the berthing parameter calculation unit 16 generates a tentative straight line L" passing through the nearest neighbor point p'1 and the nearest neighbor point p'2, as shown in FIG. 12C. After that, if the tentative straight line L" has not approximated the tentative straight line L' yet, the berthing parameter calculation unit 16 repeats the process of searching for the nearest neighbor points again by the same procedure using the tentative straight line L" and generating a straight line connecting the nearest neighbor points searched for. On the other hand, upon determining that there is no change in the equation of the generated straight line and it has converged (i.e., the straight lines before and after the update are substantially identical), the berthing parameter calculation unit 16 sets the straight line after convergence as the berthing side straight line L, and performs the calculation of the pier distance and the like. In the example shown in FIG. 12A to FIG. 12C, it can be seen that the nearest neighbor points gradually approach the peak parts of the wharf, and the straight line approaches the straight line passing through the peak parts of the wharf.

In addition, in such a situation that there is no berthing side straight line L generated within the last predetermined time in the past, if the angle formed between the target ship and the side surface of the wharf is large, the initially-generated line has a large difference from the berthing side straight line L to be calculated, which leads to the tendency of the increase in the number of repetitions until convergence. Accordingly, in some embodiments, if there is no temporal margin until the subsequent output time of the lidar 3, the berthing parameter calculation unit 16 cancels the update of the straight line, and uses the last calculated straight line as the berthing side straight line L. In this case, since the straight line which has approached the convergence is utilized as the initial value at the subsequent processing time, the convergence will be achieved in time by continuing such a process.

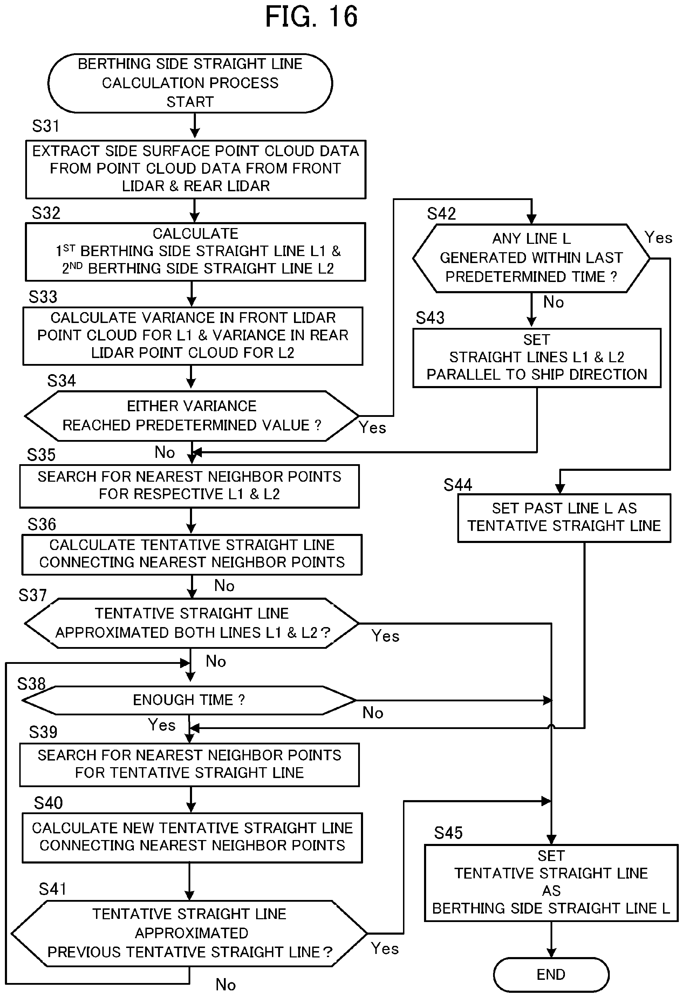

The detailed processing flow of the second generation method will be described later with reference to FIG. 16.

(5) Generation of Reliability Information

Next, a specific example of generating of reliability information will be described. The reliability information generation block 40 generates flags for respective elements, such as the viewing angle at the time of detection of the berthing place, the surface detection of the berthing place, the number of normal vectors and the variance in the normal vectors, and generates a vector of the generated flags as reliability information. Hereafter, each flag shall indicate that the flag "1" represents a high degree of reliability of the corresponding element and the frag "0" represent a low degree of reliability of the corresponding element.

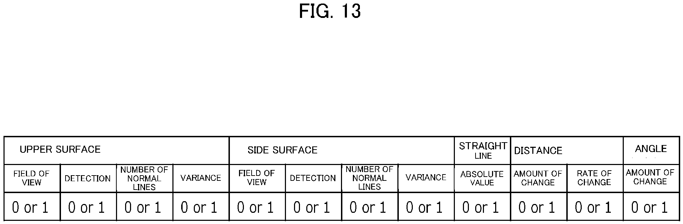

FIG. 13 shows an example of the data structure of the reliability information generated by the reliability information generation block 40. As shown in FIG. 13, the reliability information includes the following items: "upper surface", "side surface", "straight line", "distance", and "angle". In addition, the item "upper surface" includes sub-items "field of view", "detection", "number of normal lines", and "variance", while the item "side surface" includes sub-items "field of view", "detection", "number of normal lines", and "variance". In addition, the item "straight line" includes a sub-item "variance", the item "distance" includes a sub-item "amount of change" and "rate of change", and the item "angle" includes a sub-item "amount of change".

Here, the reliability information generation block 40 registers a flag in the sub-item "field of view" of the item "upper surface", wherein the flag is "1" if the upper surface of the berthing place is within the field of view and the flag is "0" if the upper surface is out of the field of view. In addition, the reliability information generation block 40 registers a flag in the sub item "detection" of the item "upper surface", wherein the flag is "1" if the detected surface is the upper surface of the berthing place and the flag is "0" if the detected surface is not the upper surface. Further, the reliability information generation block 40 registers a flag in the sub-item "normal vector number" of the item "upper surface", wherein the flag is "1" if the number of normal vectors with respect to the upper surface of the berthing place is equal to or more than a predetermined threshold value (for example, 10) and the flag is "0" when the number is less than the threshold value. Further, the reliability information generation block 40 registers a flag in the sub-item "variance" of the item "upper surface", wherein the flag is "1" if any of the variances in the x, y, z components of the normal vectors with respect to the upper surface of the berthing place is less than a predetermined threshold value (e.g., 1.0) and the flag is "0" if any of the variances is equal to or greater than the threshold value. The reliability information generation block 40 also registers a flag in each sub-item of the item "side surface" by the same rules as each sub-item of the item "upper surface".

Further, the reliability information generation block 40 registers a flag representing the degree of reliability of the berthing side straight line L calculated by either the first generation method or the second generation method in the sub-item "variance" of the item "straight line". For example, if the variance in the side surface point cloud data with respect to the berthing side straight line L is less than a predetermined threshold value, the reliability information generation block 40 registers a flag indicative of "1", while registering a flag indicative of "0" if the variance is equal to or larger than the threshold value.

Further, the reliability information generation block 40 registers a flag in the sub-item "amount of change" of the item "distance", wherein the flag is "1" if the amount of change, from the immediately preceding processing time, in the pier distance calculated by the pier distance calculation block 28 is less than a predetermined threshold value (e.g., 1.0 m) and the flag is "0" if the amount of change is equal to or greater than the threshold value. Further, the reliability information generation block 40 registers a flag in the sub-item "rate of change" of the item "distance", wherein the flag is "1" if the rate of change, from the immediately preceding processing time, in the pier distance calculated by the pier distance calculation block 28 is less than a predetermined threshold value (for example, ± 10%) and the flag is "0" if the rate of change is equal to or greater than the threshold value. The reliability information generation block 40 registers a flag in the sub-item "amount of change" of the item "angle", wherein the flag is "1" if the amount of change, from the immediately preceding processing time, in the approach angle calculated by the approach angle calculation block 29 is less than a predetermined threshold value (e.g., 1.0 degrees) and the flag is "0" if the amount of change is equal to or greater than the threshold value.

It is noted that each threshold value described above is set to a fitted value previously stored in the memory 12, for example. Further, the reliability information may be generated for each lidar 3.

According to the reliability information having such a data structure, it becomes possible to grasp the degree of reliability of the calculated pier distance, berthing speed, and approach angle. It is noted that when every sub-item of the reliability information is "1", the degree of reliability is the highest. The information processing device 1 adjusts the output of the driving source in berthing based on the reliability information. For example, the information processing device 1 may determine an upper limit value of the speed of the target ship in berthing according to the total value of respective sub-items indicated by the reliability information. In this case, for example, the information processing device 1 determines that the degree of reliability of the information regarding the berthing place decreases and the necessity to care berthing the target ship increases with a decrease in the above-mentioned total value, and therefore the information processing device 1 decreases the upper limit value of the speed of the target ship in berthing with a decrease in the above-mentioned total value.

(6) Processing Flow

(6-1) Processing Overview

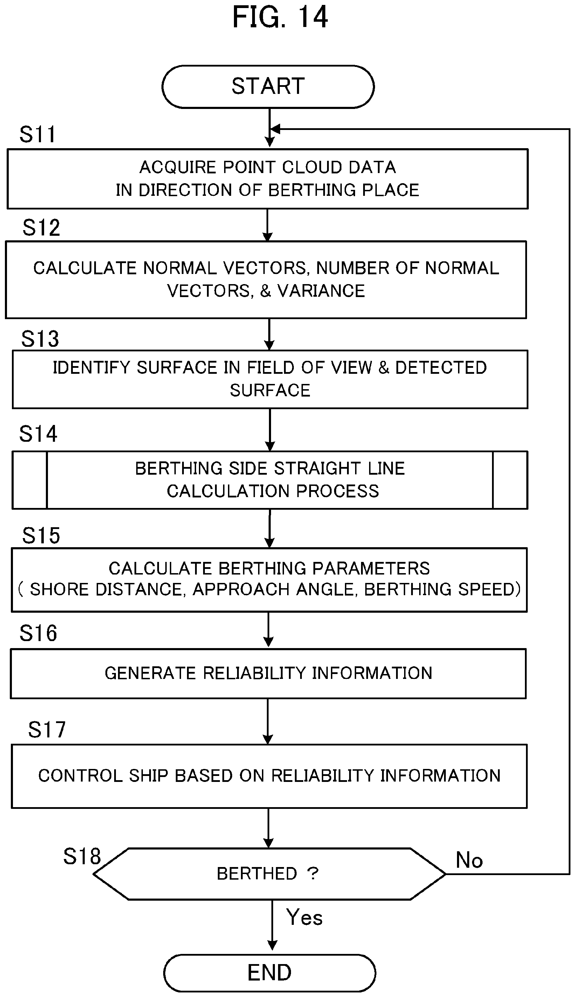

FIG. 14 is an example of a flowchart illustrating an outline of the berthing support process in the present embodiment. The information processing device 1 repeatedly executes the processing of the flowchart shown in FIG. 14.

First, the information processing device 1 acquires point cloud data in the direction of the berthing place (step S11). In this case, for example, the information processing device 1 acquires the point cloud data generated by the lidar 3 whose measurement range include the berthing side with respect to the target ship. The information processing device 1 may further perform the down-sampling of the acquired point cloud data and removal of the data obtained through reflection at the water surface.

Next, the berthing place detection unit 15 of the information processing device 1 calculates the normal vectors based on the point cloud data acquired at step S11 (step S12). Furthermore, at step S12, the berthing place detection unit 15 calculates the variance of the normal vectors and the number of the normal vectors. Further, based on the process at step S12, the berthing place detection unit 15 identifies the surface within the field of view and the detected surface (step S13).

Next, the berthing parameter calculation unit 16 executes the berthing side straight line calculation process that is a process of calculating the berthing side straight line L (step S14). The side straight line calculation process based on the first generation method will be described later with reference to FIG. 15, and the side straight line calculation process based on the second generation method will be described later with reference to FIG. 16.

Next, the berthing parameter calculation unit 16 calculates the pier distance, the approach angle, and the berthing speed, which are berthing parameters, using the berthing side straight line L calculated at step S14 (step S15).

Then, the berthing parameter calculation unit 16 generates reliability information on the basis of the process result at step S13 to step S15 (step S16). Thereafter, the information processing device 1 performs control of the ship based on the reliability information (step S17). Thus, the information processing device 1 can accurately perform the control of the ship relating to the berthing on the basis of the degree of reliability in which the berthing situation is accurately reflected.

Then, the information processing device 1 determines whether or not the target ship has been berthed (has reached the pier) (step S18). In this case, for example, based on the output signal from the sensor group 2 or a user input via the interface 11, the information processing device 1 determines whether or not the target ship has been berthed. Then, upon determining that the target ship has been berthed (step S18; Yes), the information processing device 1 terminates the process of the flowchart. On the other hand, upon determining that the target ship has not been berthed (step S18; No), the information processing device 1 proceeds back to the process at step S11.

(6-2) Berthing Side Straight Line Calculation Process Based on First Generation Method

FIG. 15 is an example of a flowchart of a berthing side straight line calculation process based on the first generation method. The berthing parameter calculation unit 16 executes the process of the flowchart shown in FIG. 15 at step S14 in FIG. 14.

First, the berthing parameter calculation unit 16 extracts the side surface point cloud data from the point cloud data generated by the front lidar and the rear lidar, respectively (step S21). Then, the berthing parameter calculation unit 16 calculates the first berthing side straight line L1 based on the side surface point cloud data of the front lidar and calculates the second berthing side straight line L2 based on the side surface point cloud data of the rear lidar (step S22).

Then, the berthing parameter calculation unit 16 searches for the nearest neighbor point p1 and the nearest neighbor point p2 corresponding to the first berthing side straight line L1 and the second berthing side straight line L2, respectively (step S23). In this instance, the berthing parameter calculation unit 16 determines the nearest neighbor point p1 based on the inner product of the vector perpendicular to the first berthing side straight line L1 and each piece of data (the position vector of each measured point) of the side surface point cloud data of the front lidar, and determines the nearest neighbor point p2 based on the inner product of the vector perpendicular to the second berthing side straight line L2 and each piece of data of the side surface point cloud data of the rear lidar.

Then, the berthing parameter calculation unit 16 calculates the tentative straight line L' connecting the nearest neighbor point p1 and the nearest neighbor point p2 (step S24). Then, the berthing parameter calculation unit 16 determines whether or not the tentative straight line L' approximates both the first berthing side straight line L1 and the second berthing side straight line L2 (step S25). For example, if such a condition is satisfied that the maximum element-to-element difference value between the unit vector of the tentative straight line L' and the unit vector of the first berthing side straight line L1 is equal to or less than a predetermined value and that the maximum element-to-element difference value between the unit vector of the tentative straight line L' and the unit vector of the second berthing side straight line L2 is equal to or less than the predetermined value, the berthing parameter calculation unit 16 determines that the tentative straight line L' approximates both the first berthing side straight line L1 and the second berthing side straight line L2. In contrasts, if the condition is not satisfied, the berthing parameter calculation unit 16 determines that the tentative straight line L' does not approximate the first berthing side straight line L1 and/or the second berthing side straight line L2.

Then, if the tentative straight line L' does not approximate at least one of the first berthing side straight line L1 and/or the second berthing side straight line L2 (step S25; No), the berthing parameter calculation unit 16 determines whether or not there is a temporal margin until the subsequent time for the lidar 3 to output the point cloud data (step S26). Then, if the tentative straight line L' approximates both the first berthing side straight line L1 and the second berthing side straight line L2 (step S25; Yes), or if there is no temporal margin until the subsequent time for the lidar 3 to output the point cloud data (step S26; No), the berthing parameter calculation unit 16 sets the tentative straight line as the berthing side straight line L (step S30).

On the other hand, if there is a temporal margin (step S26; Yes), the berthing parameter calculation unit 16 searches for the nearest neighbor points (the nearest neighbor point p1 and the nearest neighbor point p2) for the tentative straight line (step S27). Then, the berthing parameter calculation unit 16 calculates a new tentative straight line connecting the nearest neighbor points (step S28). Then, the berthing parameter calculation unit 16 determines whether or not the calculated new tentative straight line approximates the previous tentative straight line (step S29). If the calculated new tentative straight line approximates the previous tentative straight line (step S29; Yes), the berthing parameter calculation unit 16 sets the tentative straight line as the berthing side straight line L (step S30). On the other hand, if the calculated new tentative straight line does not approximate the previous tentative straight line (step S29; No), the berthing parameter calculation unit 16 proceeds back to the process at step S26.

(6-3) Berthing Side Straight Line Calculation Process Based on Second Generation Method

FIG. 16 is an example of a flowchart of the berthing side straight line calculation process based on the second generation method. The berthing parameter calculation unit 16 executes the process of the flowchart shown in FIG. 16 at step S14 in FIG. 14.

First, the berthing parameter calculation unit 16 extracts the side surface point cloud data from the point cloud data generated by the front lidar and the rear lidar, respectively (step S31). Then, the berthing parameter calculation unit 16 calculates the first berthing side straight line L1 based on the side surface point cloud data of the front lidar and calculates the second berthing side straight line L2 based on the side surface point cloud data of the rear lidar (step S32).

Then, the berthing parameter calculation unit 16 calculates the variance in the side surface point cloud data of the front lidar with respect to the first berthing side straight line L1 and the variance in the side surface point cloud data of the front lidar with respect to the second berthing side straight line L2 (step S33). Then, the berthing parameter calculation unit 16 determines whether or not any of the calculated variances is equal to or larger than a predetermined value (step S34).

If any of the above-described variances is equal to or larger than the predetermined value (step S34; Yes), the berthing parameter calculation unit 16 determines that the first berthing side straight line L1 and the second berthing side straight line L2 should not be used, and proceeds to the process at step S42. Then, the berthing parameter calculation unit 16 determines whether or not there is a previous berthing side straight line L generated within the last predetermined time (step S42). Then, if there is a previous berthing side straight line L generated within the last predetermined time (step S42; Yes), the berthing parameter calculation unit 16 sets the previous berthing side straight line L as a tentative straight line (step S44), then proceeds to the process at step S39. On the other hand, if there is no berthing side straight line L generated within the last predetermined time (step S42; No), the berthing parameter calculation unit 16 generates a straight line parallel to the direction of the target ship as the first berthing side straight line L1 and the second berthing side straight line L2 (step S43).

Meanwhile, if any of the above-described variances is less than the predetermined value (step S34; No), or after the execution of the process at step S43, the berthing parameter calculation unit 16 searches for the nearest neighbor points corresponding to the first berthing side straight line L1 and the second berthing side straight line L2, respectively (step S35). After the process at step S35, the berthing parameter calculation unit 16 calculates the tentative straight line connecting the nearest neighbor points (step S36).

Then, the berthing parameter calculation unit 16 determines whether or not the tentative straight line approximates both the first berthing side straight line L1 and the second berthing side straight line L2 (step S37). Then, if the tentative straight line does not approximate at least one of the first berthing side straight line L1 and/or the second berthing side straight line L2 (step S37; No), the berthing parameter calculation unit 16 determines whether or not there is a temporal margin until the subsequent time for the lidar 3 to output the point cloud data (step S38). Then, if the tentative straight line L' approximates both the first berthing side straight line L1 and the second berthing side straight line L2 (step S37; Yes), or if there is no temporal margin until the subsequent time for the lidar 3 to output the point cloud data (step S38; No), the berthing parameter calculation unit 16 sets the tentative straight line as the berthing side straight line L (step S45).

On the other hand, if there is a temporal margin (step S38; Yes), the berthing parameter calculation unit 16 searches for the nearest neighbor points (the nearest neighbor point p1 and the nearest neighbor point p2) for the tentative straight line (step S39). Then, the berthing parameter calculation unit 16 calculates a new tentative straight line connecting the nearest neighbor points (step S40). Then, the berthing parameter calculation unit 16 determines whether or not the calculated new tentative straight line approximates the previous tentative straight line (step S41). If the calculated new tentative straight line approximates the previous tentative straight line (step S41; Yes), the berthing parameter calculation unit 16 sets the tentative straight line as the berthing side straight line L (step S45). On the other hand, if the calculated new tentative straight line does not approximate the previous tentative straight line (step S41; No), the berthing parameter calculation unit 16 proceeds back to the process at step S38.

(7) Modifications

(First Modification)

The information processing device 1 may identify the the hull part (closest part) closest to the pier and the shortest distance between the closest part and the pier to use them for berthing or leaving operation.

In this case, the information processing device 1 determines the above-described closest part and the shortest distance by the following (Step 1) to (Step 3).

(Step 1) Calculate the distance from several points (also referred to as "contour points Po") representing the contour of the ship to the berthing side straight line L.

(Step 2) Extract the minimum value from distances from the calculated contour points Po to the berthing straight line L.

(Step 3) Identify the minimum value as the shortest pier distance while identifying the contour point Po corresponding to the minimum value as the closest part to the pier.

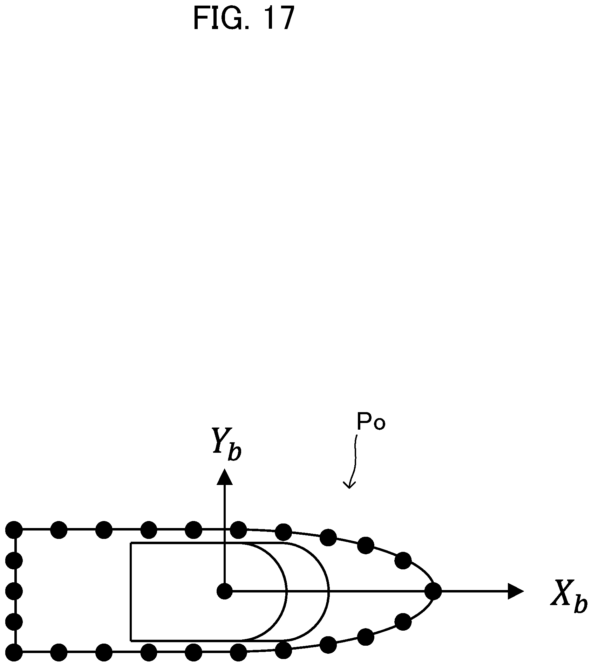

FIG. 17 is a bird's-eye view of a target ship with a clear indication of the contour points Po. For example, contour data, which is position data indicating the contour positions of the target ship, is stored in the memory 12. The contour data is data having records of a plurality of contour points Po (24 points in this case) representing the contour of the target ship as the coordinates of the ship coordinate system. Here, the front (forward) direction of the target ship corresponds to the "$X_b$" coordinate, the side direction of the target ship corresponds to the "$Y_b$" coordinate, and the vertical direction of the target ship corresponds to the "$Z_b$" coordinate. Then, the measurement data, measured by the lidar 3, in the coordinate system with respect to the lidar 3 is converted into data in the ship coordinate system. It is noted that the process of converting the point cloud data in the coordinate system with respect to the lidar installed in the moving body to data in the coordinate system of the moving body, for example, is disclosed in the PCT International Publication WO2019/188745.

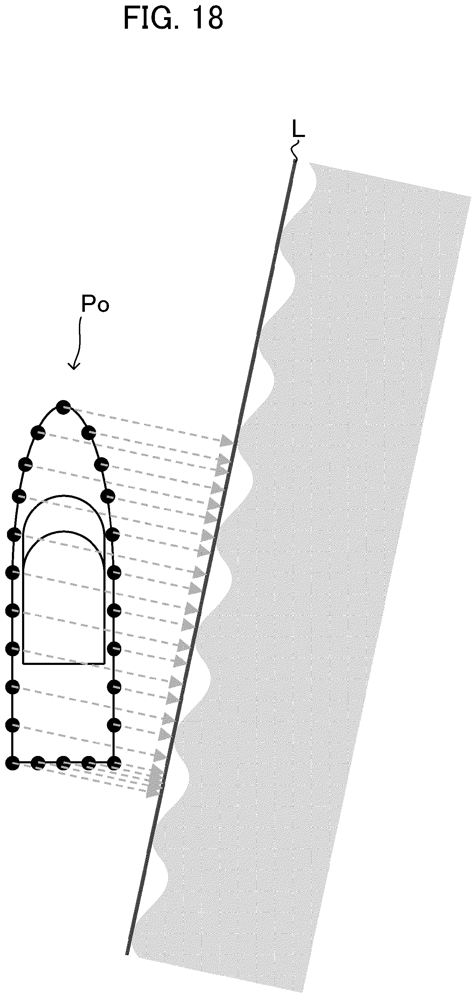

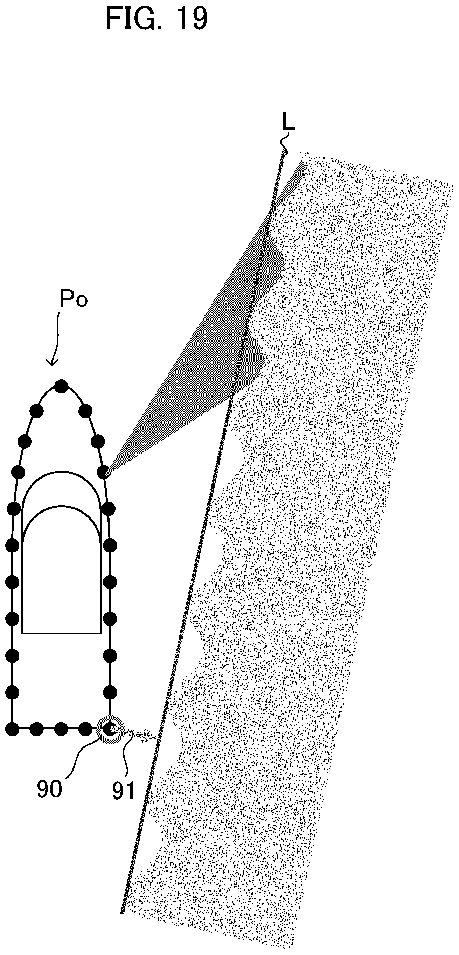

FIG. 18 is a view clearly showing the distances from the contour points Po to the berthing side straight line L by arrows. Calculation of these distances carried out by determining the length of the perpendicular line from each contour point Po to the berthing side straight line L, in the same way as described above. Here, arrows indicating the above-mentioned distances for 24 contour points Po are explicitly shown. FIG. 19 is a diagram illustrating the closest part and the shortest distance. Here, the contour point Po corresponding to the shortest distance extracted at (Step 2) is highlighted by the circle 90 as the closest part, and the shortest distance from the closest part to the wharf is indicated by an arrow 91.

Therefore, the first modification allows for grasping the distance between the ship portion closest to the target wharf and the target wharf to contribute to the safer and smoother operation support of the ship.

(Second Modification)

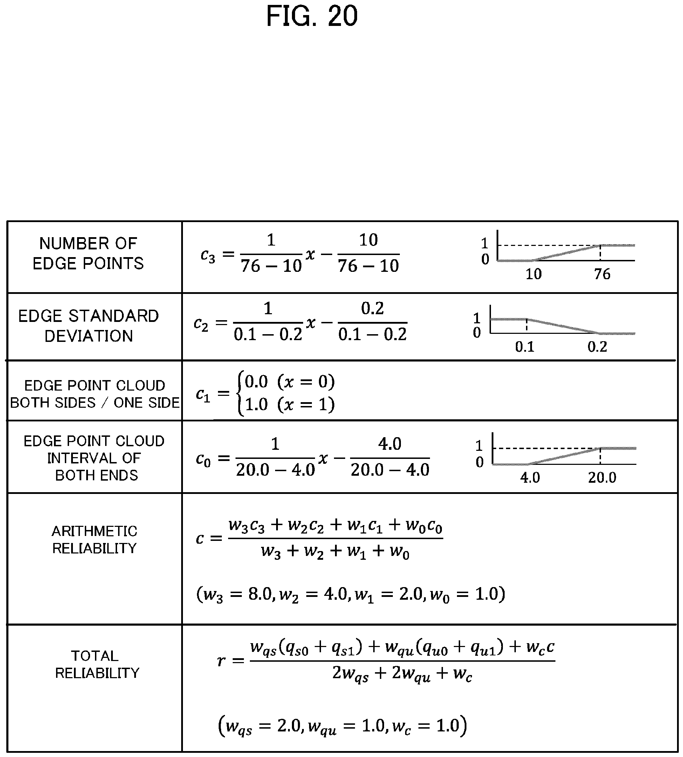

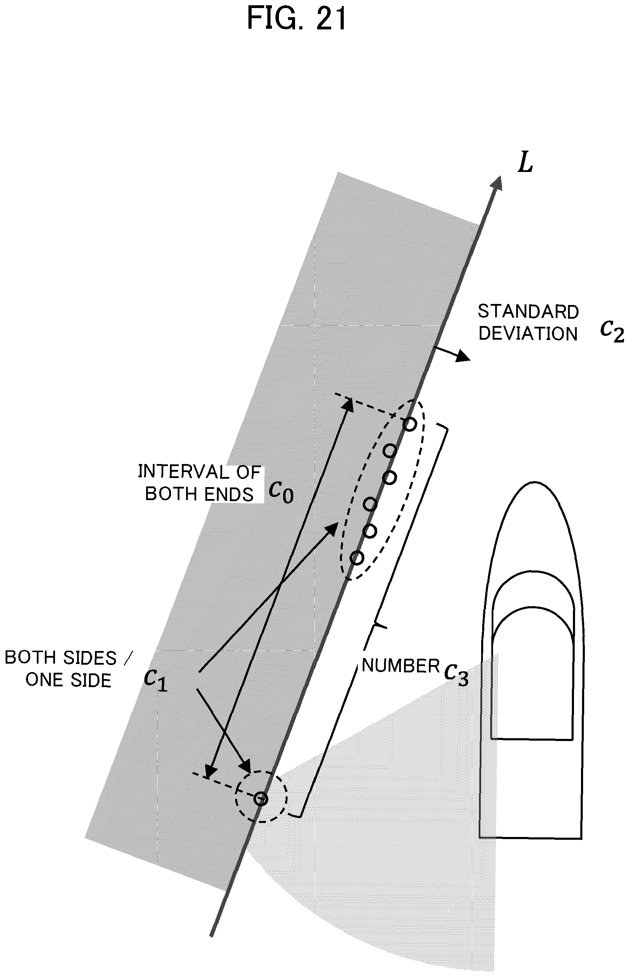

FIG. 20 shows the indicators and the degree of reliability included in the reliability information according to the modification. FIG. 21 is a bird's-eye view of the target ship and berthing place clearly showing the indicators shown in FIG. 20. Here, the measured points on or around the edge of the berthing place is also referred to as "target points".

The indicator "cs" is an indicator based on the number of target points. Here, as an example, the indicator is represented as a linear function having the variable x which denotes the number of the target points. The indicator "$c_2$" is an indicator based on the standard deviation of the target points. Here, as an example, the indicator is represented as a linear function having the variable x which denotes the standard deviation of the target points. The indicator "$c_1$" is an indicator indicating whether or not the front side and rear side of wharf could be measured by two lidars 3, and here, as an example, the indicator is set to "1.0" when both sides were measured and is set to "0.0" when only one side was measured. The indicator "$c_0$" is an indicator based on the interval of both ends of the sequence of the target points (both ends along the berthing side straight line L), and it is represented as a linear function having the variable x which denotes the above-mentioned interval of the both ends. The indicators $c_0$ to $c_3$ are also normalized to range from 0 to 1.

The arithmetic reliability "c" is a degree of reliability based on the indicators $c_0$ to $c_3$ described above, and is herein a weighted mean value of the indicators $c_0$ to $c_3$ using the weight coefficients "$w_0$" to "$w_3$" according to the degrees of importance of the indicators $c_0$ to $c_3$. An exemplary setting of the weight coefficients $w_0$ to $w_3$ is shown. Since each indicator $c_0$ to $c_3$ ranges from 0 to 1, the arithmetic reliability c, which is the weighted mean of them, is also calculated as a numerical value in the range from 0 to 1.

The total reliability "r" is a degree of reliability based on a side surface detection reliability "$q_s$", a top detection reliability "$q_u$", and the arithmetic reliability c, wherein the side surface detection reliability $q_s$ is a degree of reliability regarding detection of the side surface of the wharf and the top detection reliability $q_u$ is a reliability regarding detection of the upper surface of the wharf. The total reliability herein is a weighted mean value of the reliability $q_s$, $q_u$, and c using the weight coefficients "$w_{qs}$", "$w_{qu}$", "$w_{m0}$", "$w_{m1}$", "$w_c$" according to the degrees of importance of the reliability $q_s$, $q_u$, $m_0$, $m_1$, and c. Further, an exemplary setting of the weight coefficients $w_{qs}$, $w_{qu}$, $w_{m0}$, $w_{m1}$, and $w_c$ is shown. In some embodiments, for example, the information processing device 1 may calculate the side surface detection reliability $q_s$ based on the item "side surface" of the reliability information illustrated in FIG. 14, and calculate the upper surface detection reliability $q_u$ based on the item "upper surface" of the reliability information in the same figure. Then, both the side surface detection reliability $q_s$ and the upper surface detection reliability $q_u$ are calculated to range from 0 to 1. In addition, when both the front and rear of the wharf are detected, the side surface detection reliability $q_{s0}$ of the front wharf, the side surface detection reliability $q_{s1}$ of the rear wharf, the upper surface detection reliability $q_{u0}$ of the front wharf, and the upper surface detection reliability $q_{u1}$ of the rear wharf are calculated, respectively. Since both the side surface detection reliability $q_s$ and the upper surface detection reliability $q_u$ and the arithmetic reliability c are in the range from 0 to 1, the total reliability r, which is the weighted mean of them, is also calculated as a numerical value in the range from 0 to 1. Therefore, it can be seen that the closer the total reliability r is to 1, the higher the degree of reliability of the calculated berthing parameters becomes, whereas the closer the total reliability r is to 0, the lower the degree of reliability of the calculated berthing parameters becomes.

The reliability information including each indicator and degree of reliability according to the modification suitably enables the information processing device 1 to perform such adjustment of the output of the driving source in berthing.

As described above, the controller 13 of the information processing device 1 includes at least an acquisition unit, a straight line calculation unit, and a distance calculation unit. The acquisition unit is configured to acquire measurement data, which is a set of data representing a plurality of measured points measured by a measurement device provided in a ship. The straight line calculation unit is configured to calculate, based on the measurement data, a straight line along a berthing place where the ship is berthed. The distance calculation unit is configured to calculate the distance between the ship and the berthing place based on the distance between the straight line and each of the measured points. By performing this process, the controller 13 can accurately calculate the pier distance between the ship and the berthing place with reference to the measurement device of interest.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

DESCRIPTION OF REFERENCE NUMERALS

1    Information processing device
2    Sensor group
3    Lidar

**Claims**

1.   An information processing device comprising:

an acquisition unit configured to acquire measurement data, which is a set of data representing a plurality of measured points measured by a measurement device provided in a ship;
a straight line calculation unit configured to calculate, based on the measurement data, a straight line along a berthing place where the ship is berthed; and
a distance calculation unit configured to calculate, based on the distance between the straight line and each of the measured points, a distance between the ship and the berthing place.

2.   The information processing device according to claim 1, further comprising

a nearest neighbor point search unit configured to search the measured points for a nearest neighbor point with respect to the ship, based on the straight line,
wherein the distance calculation unit is configured to calculate the distance based on the nearest neighbor point.

3.   The information processing device according to claim 2,

wherein the measurement device includes a first measurement device and a second measurement device,
wherein the straight line calculation unit is configured to calculate a second straight line connecting

a first nearest neighbor point, with respect to the ship, for which measured points of first measurement data measured by the first measurement device are searched based on the straight line and
a second nearest neighbor point, with respect to the ship, for which measured points of second measurement data measured by the second measurement device are searched based on the straight line, and

wherein the distance calculation unit is configured to calculate the distance based on the second straight line.

4. The information processing device according to claim 3,

wherein the straight line calculation unit is configured, if the second straight line does not approximate the straight line calculated prior to the second straight line, to

re-search for the first nearest neighbor point and the second nearest neighbor point based on the second straight line and
calculate a third straight line connecting the first nearest neighbor point and the second nearest neighbor point which are re-searched for,

wherein the distance calculation unit is configured to calculate the distance based on the third straight line.

5. The information processing device according to claim 4,
wherein the straight line calculation unit is configured to repeat re-searching for the first nearest neighbor point and the second nearest neighbor point and calculating the straight line until the calculated straight line has converged.

6. The information processing device according to any one of claims 1 to 5,
wherein, if an indicator representing a dispersion in the measured points with respect to the straight line is equal to or larger than a threshold value,
the straight line calculation unit is configured to calculate the straight line based on the nearest neighbor point for which the measured points are searched based on a straight line calculated by the straight line calculation unit before a current processing time.

7. The information processing device according to any one of claims 1 to 6,
wherein, if an indicator representing a dispersion in the measured points with respect to the straight line is equal to or larger than a threshold value and there is no straight line calculated by the straight line calculation unit within a predetermined time before a current processing time,
the straight line calculation unit is configured to calculate the straight line based on a nearest neighbor point for which the measured points are searched based on a straight line parallel to a direction of the ship.

8. The information processing device according to any one of claims 1 to 7, further comprising:

a shortest pier distance calculation unit configured to

extract a contour point, which has a shortest length of a perpendicular line from the contour point to the straight line, among contour points of the ship and
calculate a shortest distance from a hull of the ship to the berthing place; and

a proximate portion identification unit configured to identify a part of the ship closest to the berthing place.

9. A control method performed by a computer, comprising:

acquiring measurement data, which is a set of data representing a plurality of measured points measured by a measurement device provided in a ship;
calculating, based on the measurement data, a straight line along a berthing place where the ship is berthed; and
calculating, based on the distance between the straight line and each of the measured points, a distance between the ship and the berthing place.

10. A program causing a computer to:

acquire measurement data, which is a set of data representing a plurality of measured points measured by a measurement device provided in a ship;
calculate, based on the measurement data, a straight line along a berthing place where the ship is berthed; and
calculate, based on the distance between the straight line and each of the measured points, a distance between the ship and the berthing place.

**11.** A storage medium storing the program according to claim 10.

FIG. 1A

1

2

INFORMATION
PROCESSING
DEVICE

SENSOR GROUP

LIDAR

3

FIG. 1B

90

3

FIG. 1C

90

3

# FIG. 2

INTERFACE

MEMORY

CONTROLLER

BERTHING PLACE
DETECTION UNIT

BERTHING
PARAMETER
CALCULATION UNIT

# FIG. 3

BERTHING PLACE
DETECTION UNIT

15

POINT
CLOUD
DATA

NORMAL VECTOR
CALCULATION

20

FIELD-OF-VIEW
/DETECTED
SURFACE
IDENTIFICATION

21

NORMAL VECTOR
NUMBER
IDENTIFICATION

22

AVERAGE
/VARIANCE
CALCULATION

23

BERTHING
STATUS
DETERMINATION

24

16

40

RELIABILITY
INFORMATION
GENERATION

APPROACH ANGLE
CALCULATION

29

STRAIGHT LINE
GENERATION

27

PIER DISTANCE
CALCULATION

28

BERTHING SPEED
CALCULATION

30

BERTHING PARAMETER
CALCULATION UNIT

FIG. 4A

FIG. 4B

WHARF

FIG. 4C

FIG. 5A        FIG. 5B        FIG. 5C

FIG. 6A

FIG. 6B

FIG. 7A

FIG. 7B

FIG. 7C

FIG. 8A          FIG. 8B          FIG. 8C

DATA CLOSEST TO
PEAK OF WHARF
AMONG POINT CLOUD

FIG. 9A            FIG. 9B            FIG. 9C

# FIG. 10

$L_1$

$\sigma^2$

FIG. 11A

FIG. 11B

FIG. 11C

FIG. 12A

FIG. 12B

FIG. 12C

FIG. 13

| UPPER SURFACE | | | | SIDE SURFACE | | | | STRAIGHT LINE | DISTANCE | | ANGLE |
|---|---|---|---|---|---|---|---|---|---|---|---|
| FIELD OF VIEW | DETECTION | NUMBER OF NORMAL LINES | VARIANCE | FIELD OF VIEW | DETECTION | NUMBER OF NORMAL LINES | VARIANCE | ABSOLUTE VALUE | AMOUNT OF CHANGE | RATE OF CHANGE | AMOUNT OF CHANGE |
| 0 or 1 | 0 or 1 | 0 or 1 | 0 or 1 | 0 or 1 | 0 or 1 | 0 or 1 | 0 or 1 | 0 or 1 | 0 or 1 | 0 or 1 | 0 or 1 |

# FIG. 14

START

S11

ACQUIRE POINT CLOUD DATA
IN DIRECTION OF BERTHING PLACE

S12

CALCULATE NORMAL VECTORS, NUMBER OF NORMAL
VECTORS, & VARIANCE

S13

IDENTIFY SURFACE IN FIELD OF VIEW & DETECTED
SURFACE

S14

BERTHING SIDE STRAIGHT LINE
CALCULATION PROCESS

S15

CALCULATE BERTHING PARAMETERS
( SHORE DISTANCE, APPROACH ANGLE, BERTHING SPEED)

S16

GENERATE RELIABILITY INFORMATION

S17

CONTROL SHIP BASED ON RELIABILITY INFORMATION

S18    BERTHED ?    No

Yes

END

# FIG. 15

BERTHING SIDE STRAIGHT LINE
CALCULATION PROCESS
START

S21
EXTRACT SIDE SURFACE POINT CLOUD DATA
FROM POINT CLOUD DATA OF FRONT LIDAR
& REAR LIDAR

S22
CALCULATE
1ST BERTHING SIDE STRAIGHT LINE L1 &
2ND BERTHING SIDE STRAIGHT LINE L2

S23
SEARCH FOR NEAREST NEIGHBOR POINTS
FOR RESPECTIVE LINES L1 & L2

S24
CALCULATE TENTATIVE STRAIGHT LINE
CONNECTING NEAREST NEIGHBOR POINTS

S25
TENTATIVE STRAIGHT LINE
APPROXIMATED BOTH LINES L1 & L2 ?

Yes

No

S26
ENOUGH TIME ?

No

Yes

S27
SEARCH FOR NEAREST NEIGHBOR POINTS
FOR TENTATIVE STRAIGHT LINE

S28
CALCULATE NEW TENTATIVE STRAIGHT LINE
CONNECTING NEAREST NEIGHBOR POINTS

S29
TENTATIVE STRAIGHT LINE
APPROXIMATED
PREVIOUS TENTATIVE STRAIGHT LINE ?

Yes

No

S30
SET
TENTATIVE STRAIGHT LINE
AS
BERTHING SIDE STRAIGHT LINE L

END

# FIG. 16

```
        ┌─────────────────────────────┐
        │  BERTHING SIDE STRAIGHT LINE │
        │     CALCULATION PROCESS      │
        │            START             │
        └─────────────────────────────┘
                      │
S31                   ▼
┌──────────────────────────────────────┐
│  EXTRACT SIDE SURFACE POINT CLOUD DATA │
│  FROM POINT CLOUD DATA FROM FRONT      │
│      LIDAR & REAR LIDAR                │
└──────────────────────────────────────┘
                      │
S32                   ▼
┌──────────────────────────────────────┐
│            CALCULATE                   │
│  1ST BERTHING SIDE STRAIGHT LINE L1 &  │
│  2ND BERTHING SIDE STRAIGHT LINE L2    │
└──────────────────────────────────────┘
                      │
S33                   ▼
┌──────────────────────────────────────┐
│  CALCULATE VARIANCE IN FRONT LIDAR     │
│  POINT CLOUD FOR L1 & VARIANCE IN REAR │
│  LIDAR POINT CLOUD FOR L2              │
└──────────────────────────────────────┘
                      │
S34                   ▼
       ╱────────────────────────────╲         Yes
      ⟨   EITHER VARIANCE             ⟩────────
       ╲ REACHED PREDETERMINED VALUE? ╱
        ╲────────────────────────────╱
                  No  │
S35                   ▼
┌──────────────────────────────────────┐
│  SEARCH FOR NEAREST NEIGHBOR POINTS    │
│      FOR RESPECTIVE L1 & L2            │
└──────────────────────────────────────┘
                      │
S36                   ▼
┌──────────────────────────────────────┐
│  CALCULATE TENTATIVE STRAIGHT LINE     │
│  CONNECTING NEAREST NEIGHBOR POINTS    │
└──────────────────────────────────────┘
                  No  │
S37                   ▼
       ╱────────────────────────────╲
      ⟨  TENTATIVE STRAIGHT LINE      ⟩─── Yes
       ╲ APPROXIMATED BOTH LINES L1 & L2? ╱
        ╲────────────────────────────╱
                  No  │
S38                   ▼
       ╱────────────────────────────╲    No
      ⟨        ENOUGH TIME ?          ⟩────────
        ╲────────────────────────────╱
                 Yes  │
S39                   ▼
┌──────────────────────────────────────┐
│  SEARCH FOR NEAREST NEIGHBOR POINTS    │
│     FOR TENTATIVE STRAIGHT LINE        │
└──────────────────────────────────────┘
                      │
S40                   ▼
┌──────────────────────────────────────┐
│  CALCULATE NEW TENTATIVE STRAIGHT LINE │
│  CONNECTING NEAREST NEIGHBOR POINTS    │
└──────────────────────────────────────┘
                      │
S41                   ▼
       ╱────────────────────────────╲
      ⟨  TENTATIVE STRAIGHT LINE      ⟩── Yes
       ╲     APPROXIMATED             ╱
        ╲ PREVIOUS TENTATIVE STRAIGHT LINE? ╱
         ╲──────────────────────────╱
                  No
```

S42
```
       ╱────────────────────────────╲      Yes
      ⟨   ANY LINE L                  ⟩────────
       ╲ GENERATED WITHIN LAST        ╱
        ╲ PREDETERMINED TIME ?        ╱
         ╲──────────────────────────╱
                  No  │
S43                   ▼
┌──────────────────────────────────────┐
│            SET                         │
│  STRAIGHT LINES L1 & L2                │
│  PARALLEL TO SHIP DIRECTION            │
└──────────────────────────────────────┘
```

S44
```
┌──────────────────────────────────────┐
│      SET PAST LINE L AS                │
│   TENTATIVE STRAIGHT LINE             │
└──────────────────────────────────────┘
```

S45
```
┌──────────────────────────────────────┐
│             SET                        │
│  TENTATIVE STRAIGHT LINE               │
│             AS                         │
│  BERTHING SIDE STRAIGHT LINE L         │
└──────────────────────────────────────┘
                      │
                      ▼
                  ┌───────┐
                  │  END  │
                  └───────┘
```

FIG. 17

# FIG. 18

# FIG. 19

# FIG. 20

| NUMBER OF EDGE POINTS | $c_3 = \dfrac{1}{76-10}x - \dfrac{10}{76-10}$ | |
|---|---|---|
| EDGE STANDARD DEVIATION | $c_2 = \dfrac{1}{0.1-0.2}x - \dfrac{0.2}{0.1-0.2}$ | |
| EDGE POINT CLOUD BOTH SIDES / ONE SIDE | $c_1 = \begin{cases} 0.0 \ (x=0) \\ 1.0 \ (x=1) \end{cases}$ | |
| EDGE POINT CLOUD INTERVAL OF BOTH ENDS | $c_0 = \dfrac{1}{20.0-4.0}x - \dfrac{4.0}{20.0-4.0}$ | |
| ARITHMETIC RELIABILITY | $c = \dfrac{w_3 c_3 + w_2 c_2 + w_1 c_1 + w_0 c_0}{w_3 + w_2 + w_1 + w_0}$ $(w_3 = 8.0, w_2 = 4.0, w_1 = 2.0, w_0 = 1.0)$ | |
| TOTAL RELIABILITY | $r = \dfrac{w_{qs}(q_{s0}+q_{s1}) + w_{qu}(q_{u0}+q_{u1}) + w_c c}{2w_{qs} + 2w_{qu} + w_c}$ $\left(w_{qs} = 2.0, w_{qu} = 1.0, w_c = 1.0\right)$ | |

# FIG. 21

$L$

STANDARD
DEVIATION  $C_2$

INTERVAL OF
BOTH ENDS  $C_0$

BOTH SIDES /
ONE SIDE  $C_1$

NUMBER $C_3$

## INTERNATIONAL SEARCH REPORT

International application No.

**PCT/JP2022/011585**

**A. CLASSIFICATION OF SUBJECT MATTER**

*G08G 3/00*(2006.01)i; *B63B 79/10*(2020.01)i
FI: B63B79/10; G08G3/00

According to International Patent Classification (IPC) or to both national classification and IPC

**B. FIELDS SEARCHED**

Minimum documentation searched (classification system followed by classification symbols)

G08G3/00; B63B79/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-180949 A (TAMA TLO KK) 07 July 2005 (2005-07-07) | 1, 9-11 |
| | paragraphs [0011]-[0067], fig. 1-14 | |
| A | paragraphs [0011]-[0067], fig. 1-14 | 2-8 |
| A | JP 2012-528417 A (GLAESER, Philipp) 12 November 2012 (2012-11-12) | 1-11 |
| A | KR 10-1620369 B1 (MARTEK CO., LTD.) 13 May 2016 (2016-05-13) | 1-11 |
| A | KR 10-2011-0113029 A (MOKPO NATIONAL UNIVERSITY INDUSTRY-ACADEMIA COOPERATION GROUP) 14 October 2011 (2011-10-14) | 1-11 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/011585**

| Patent document cited in search report | | | Publication date (day/month/year) | Patent family member(s) | | | Publication date (day/month/year) |
|---|---|---|---|---|---|---|---|
| JP | 2005-180949 | A | 07 July 2005 | (Family: none) | | | |
| JP | 2012-528417 | A | 12 November 2012 | US | 2012/0072059 | A1 | |
| KR | 10-1620369 | B1 | 13 May 2016 | (Family: none) | | | |
| KR | 10-2011-0113029 | A | 14 October 2011 | (Family: none) | | | |

Form PCT/ISA/210 (patent family annex) (January 2015)

**REFERENCES CITED IN THE DESCRIPTION**

**Patent documents cited in the description**

- JP 2020059403 A

- WO 2019188745 A